# EUROPÄISCHE PATENTSCHRIFT

(11) **EP 2 272 692 B1**
(45) Veröffentlichungstag und Bekanntmachung des Hinweises auf die Patenterteilung: **04.01.2017**
(21) Anmeldenummer: 10182472.0
(22) Anmeldetag: 19.01.2000
(51) Int. Cl.: B60D 1/54, B60D 1/52

(54) **Anhängekupplung**
Trailer coupling
Attelage de remorque

(30) Priorität: 21.01.1999 DE 19902355
(43) Veröffentlichungstag der Anmeldung: 12.01.2011
(62) Teilanmeldung aus: 00100977.8
(73) Patentinhaber: Scambia Holdings Cyprus Limited, 3106 Limassol (CY)
(72) Erfinder: Fischer, Michael, 71679, Asperg (DE); Riehle, Hans, 71638, Ludwigsburg (DE)
(74) Vertreter: Hoeger, Stellrecht & Partner Patentanwälte mbB

(56) Entgegenhaltungen:
- WO-A-99/15349
- DE-A1- 3 328 524
- DE-A1- 19 521 896
- DE-A1- 19 612 959
- DE-A1- 19 612 961
- DE-A1- 19 651 562
- DE-A1- 19 654 867
- DE-A1- 19 711 535
- DE-C- 964 834
- FR-A- 2 450 167

## Beschreibung

Die Erfindung betrifft eine Anhängekupplung für Kraftfahrzeuge, umfassend eine Kupplungseinheit mit einem fahrzeugfest angeordneten Lagerteil und einem am Lagerteil gelagerten Schwenkteil, mit einem Kugelhals und mit einer Kupplungskugel, welche gegenüber dem Lagerteil um eine Achse zwischen einer Ruhestellung und einer Arbeitsstellung schwenkbar ist, und mit einer mechanischen Fixiereinrichtung, mit welcher der Kugelhals in der Arbeitsstellung gegenüber dem Lagerteil fixierbar ist.

Eine Anhängekupplung ist aus der deutschen Patentanmeldung DE 196 54 867 A bekannt. Eine derartige Anhängekupplung hat den Nachteil, dass die Fixiereinrichtung nur durch einen Elektromotor bewegbar ist und somit nur durch diesen von der nicht fixierenden Stellung in die fixierende Stellung und umgekehrt bewegbar ist und somit bei abgeschaltetem Elektromotor ein Lösen der Fixierung des Kugelhalses erfolgen kann, oder bei Ausfall des Elektromotors keine Fixierung des Kugelhalses erfolgen kann.

Aus der DE 197 11 535 A1 ist eine Anhängekupplung gemäß dem Oberbegriff des Anspruchs 1 bekannt, bei welcher ein Ende des Kugelhalses axial verschiebbar und durch eine Kulissenführung im Zuge der axialen Verschiebung verschwenkbar ist. Die Endstellungen sind dabei durch eine elektromagnetisch betätigbare Verriegelungsvorrichtung fixierbar.

Der Erfindung liegt daher die Aufgabe zugrunde, eine Anhängekupplung der erfindungsgemäßen Art derart zu verbessern, dass die Fixierung des Kugelhalses stets sichergestellt ist und aufrechterhalten bleibt.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass die Fixiereinrichtung so ausgebildet ist, dass sie aufgrund des elastischen Kraftspeichers von sich aus die fixierende Stellung anstrebt und in dieser verbleibt und somit durch den elastischen Kraftspeicher ständig angetrieben in Richtung ihrer fixierenden Stellung wirkt. Damit ist eine optimale Sicherheit bei Ausfällen im elektrischen Antrieb gegen jegliche Art eines Lösens der Fixiereinrichtung beim Betrieb der Anhängekupplung gegeben.

Zum Lösen der mechanischen Fixiereinrichtung wird dann dem als "Antrieb" derselben dienenden elastischen Kraftspeicher mittels eines elektrisch betreibbaren Löseantriebs entgegengewirkt, so dass auch bei einer derartigen mechanischen Fixiereinrichtung in komfortabler Weise ein elektrisch betreibbares Lösen derselben möglich ist.

Dabei ist erfindungsgemäß vorgesehen, dass der Löseantrieb durch einen Elektromotor antreibbar ist, da mit einem Elektromotor, bei Einsatz eines Untersetzungsgetriebes, mit kleinen elektrischen Leistungen große Kräfte erzeugbar sind.

Der Vorteil der erfindungsgemäßen Lösung ist insbesondere darin zu sehen, dass durch die mechanische Fixiereinrichtung mit dem elastischen Kraftspeicher die Möglichkeit besteht, die Kraftwirkungen für das Erreichen der fixierenden Stellung und das Aufrechterhalten derselben über die Auslegung der Fixiereinrichtung selbst festzulegen, so dass insbesondere die Möglichkeit besteht, mit hohen Kräften sowohl beim Erreichen als auch beim Aufrechterhalten der fixierenden Stellung zu arbeiten und der Löseantrieb hiervon völlig unabhängig ausgebildet sein kann. Der Löseantrieb braucht lediglich so ausgelegt zu werden, dass er in der Lage ist, die Fixiereinrichtung zu betätigen, wobei für eine derartige Betätigung der Fixiereinrichtung zum Lösen ausreichend Zeit zur Verfügung steht, so dass mit geringen Leistungen im Löseantrieb gearbeitet werden kann, während der Übergang der Fixiereinrichtung in ihre fixierende Stellung möglichst rasch und mit großen Kräften erfolgen sollte, um sicherzustellen, dass die Fixiereinrichtung in jedem Fall die gewünschte voll fixierende Stellung sicher erreicht und nicht in unerwünschten Zwischenstellungen verbleibt, in welchen beispielsweise der Kugelhals nur mit großem Spiel fixiert ist.

Erfindungsgemäß ist vorgesehen, dass der Löseantrieb während eines für das Herausbewegen des Kugelhalses aus der jeweiligen Stellung erforderlichen Zeitraums auf die Fixiereinrichtung einwirkt, da damit sichergestellt ist, dass ohne Gegenwirkung der Fixiereinrichtung der Kugelhals aus der jeweiligen Stellung herausbewegbar ist.

Um eine einwandfreie Fixierung des Kugelhalses in der jeweiligen Stellung zu erreichen, ist vorgesehen, dass der Löseantrieb bereits vor Erreichen der jeweils nachfolgenden Stellung nicht mehr auf die Fixiereinrichtung einwirkt. Damit ist sichergestellt, dass das Fixieren des Kugelhalses in der jeweiligen Stellung ausschließlich durch einen Antrieb der Fixiereinrichtung mittels des elastischen Kraftspeichers erfolgt und somit die mechanische Fixiereinrichtung völlig unabhängig von dem Löseantrieb so ausgebildet werden kann, dass diese selbsttätig den Kugelhals bei Erreichen der jeweiligen Stellung, d. h. der Ruhestellung oder der Arbeitsstellung, fixiert und diese Fixierung auch aufrechterhält.

Ferner ist vorteilhaft, dass die übrigen Komponenten der Fixiereinrichtung, beispielsweise die einer Betätigungseinrichtung für ein Fixierelement, mit geringen Kräften bewegbar sind.

Eine besonders günstige Lösung sieht vor, dass mit der Fixiereinrichtung der Kugelhals auch in der Ruhestellung fixierbar ist und dass die Fixiereinrichtung auch in der Ruhestellung mittels des Lösearitriebs betätigbar ist.

Hinsichtlich der Einwirkung des Löseantriebs wurde im Zusammenhang mit der bisherigen Erläuterung der Erfindung lediglich gefordert, dass dieser im Sinne eines Lösens der Fixierung des Kugelhalses erfolgen soll.

Hinsichtlich der Ausbildung des Löseantriebs selbst wurden bislang keine näheren Angaben gemacht. So könnte der Löseantrieb selbst unterschiedlich ausgebildet sein. Ein besonders vorteilhaftes Ausführungsbeispiel sieht vor, dass der Löseantrieb ein Exzentergetriebe zur Betätigung der Fixiereinrichtung umfasst. Ein Exzentergetriebe eignet sich besonders vorteilhaft, um mit geringer Antriebsleistung große Kräfte zur Betätigung der Fixiereinrichtung zu erhalten und dabei außerdem den gewünschten Weg in einfacher Art und Weise festzulegen.

Hinsichtlich des Betreibens eines derartigen Exzentergetriebes sind die unterschiedlichsten Möglichkeiten denkbar. Beispielsweise wäre es denkbar, das Exzentergetriebe so zu betreiben, dass zur Betätigung der Fixiereinrichtung ein Totpunkt angefahren und dann durch Richtungsumkehr dieser wieder verlassen wird.

Besonders günstig lässt sich jedoch das Exzentergetriebe dann einsetzen, wenn zur Betätigung der Fixiereinrichtung ein einmaliges Durchlaufen eines Totpunktes erfolgt, so dass gar keine präzise Steuerung des Antriebs des Exzentergetriebes erforderlich ist, sondern nur sichergestellt werden muss, dass der Totpunkt durchlaufen wird.

Ferner lässt sich ein erfindungsgemäßes Exzentergetriebe auch in einfacher Weise so ausbilden, dass die Fixiereinrichtung in Fixierbereitschaft durch dieses unbeaufschlagt ist. Vorzugsweise ist dabei vorgesehen, dass das Exzentergetriebe in einem anderen Totpunkt die Fixiereinrichtung unbeaufschlagt lässt.

Mit einer derartigen Ausbildung des Lösegetriebes als Exzentergetriebe lassen sich ohne präzise Steuerung des Antriebs des Exzentergetriebes in einfacher Weise die erfindungsgemäßen Funktionen realisieren.

Eine andere vorteilhafte Lösung sieht vor, dass der Löseantrieb ein Spindelgetriebe umfasst. Ein Spindelgetriebe hat den Vorteil, dass für dieses kein großes Untersetzungsgetriebe erforderlich ist, da das Spindelgetriebe selbst eine hohe Untersetzung bietet und somit die Möglichkeit schafft, in einfacher Weise große Kräfte zur Betätigung der Fixiereinrichtung zu erzeugen.

Prinzipiell wäre ein Spindelgetriebe dergestalt einsetzbar, dass dieses ein Betätigungselement für die Fixiereinrichtung zwischen zwei Stellungen hin- und herbewegt, wobei eine Stellung die betätigte Stellung der Fixiereinrichtung darstellt.

Eine besonders günstige Lösung sieht vor, dass das Spindelgetriebe in einer ersten Stellung mit einem auf die Fixiereinrichtung wirkenden Betätigungselement zum Betätigen der Fixiereinrichtung koppelbar und nach Durchlaufen einer die Fixiereinrichtung betätigenden Stellung in einer zweiten Endstellung von diesem lösbar ist. Dieses Ausführungsbeispiel hat den Vorteil, dass damit die Möglichkeit besteht sicherzustellen, dass unabhängig von der Stellung des Spindelgetriebes die Fixiereinrichtung dann in Fixierbereitschaft steht, wenn die die Fixiereinrichtung betätigende Stellung durchlaufen ist, so dass Funktionsstörungen im Spindelgetriebe sich nicht negativ auf die Fixierbereitschaft der Fixiereinrichtung auswirken und somit eine Entkopplung zwischen Löseantrieb und Fixiereinrichtung realisierbar ist, die ein selbständiges Übergehen der Fixiereinrichtung in die den Kugelhals fixierende Stellung ermöglicht.

Die Koppeleinrichtung könnte beispielsweise zusätzlich durch eine Steuerung gesteuert sein. Besonders günstig ist es jedoch, wenn die Koppeleinrichtung selbsttätig, d. h. zwangsgesteuert, arbeitet.

Hinsichtlich des Zusammenwirkens zwischen dem Löseantrieb und der Fixiereinrichtung sind die unterschiedlichsten Möglichkeiten denkbar. Eine Möglichkeit der Anordnung des Löseantriebs wäre die, diesen fest mit der Fixiereinrichtung zu einer Einheit zu verbinden, beispielsweise an der Fixiereinrichtung abgestützt anzuordnen.

Da jedoch im Bereich der Kupplungseinheit stets Raumprobleme bestehen, ist es besonders günstig, wenn der Löseantrieb getrennt von der Fixiereinrichtung am Kraftfahrzeug angeordnet ist und über ein Verbindungselement auf die Fixiereinrichtung wirkt. Diese Lösung schafft den großen Vorteil, den Löseantrieb völlig unabhängig von der Fixiereinrichtung und insbesondere der Kupplungseinheit anzuordnen, und damit beispielsweise nicht benötigte Räume im Kraftfahrzeug auszunutzen.

Beispielsweise kann damit der Löseantrieb seitlich der Kupplungseinheit in einem freien Raum oder auch im Kotflügelbereich oder im Kofferraum des Fahrzeugs im Abstand von der Kupplungseinheit angeordnet werden.

Das Verbindungselement könnte prinzipiell als starres Verbindungselement ausgebildet sein, beispielsweise als Hebelkonstruktion.

Besonders vorteilhaft lässt sich die Trennung von Löseantrieb und Fixiereinrichtung dann ausnutzen, wenn das Verbindungselement als flexibles Verbindungselement ausgebildet ist und somit der Löseantrieb problemlos an einer geeigneten Stelle platziert werden kann, ohne dass auf eine exakte Positionierung von Löseantrieb relativ zur Fixiereinrichtung geachtet werden muss.

Eine besonders vorteilhafte Ausbildung des Verbindungselements sieht vor, dass dieses als Zugseil, insbesondere als Zugseil eines Bowdenzuges, ausgebildet ist.

Um die Bedienung der erfindungsgemäßen Anhängekupplung möglichst einfach zu gestalten, ist vorgesehen, dass die Anhängekupplung mit einer Steuerung versehen ist, welche nach einmaligem Betätigen eines Startschalters über den Löseantrieb die Fixiereinrichtung derart betätigt, dass eine Aufhebung der Fixierung des Kugelhalses in der jeweiligen Stellung und anschließend ein Übergang der Fixiereinrichtung in eine Fixierbereitschaftsstellung erfolgt. Eine derartige Steuerung hat den Vorteil, dass es damit für die Bedienungsperson lediglich erforderlich ist, einmal den Startschalter zu betätigen, und dann die Steuerung selbsttätig die übrigen für das Lösen der Fixiereinrichtung erforderlichen Funktionen ausübt und insbesondere den Löseantrieb wieder in eine Ausgangsstellung bringt, welche wiederum ein nachfolgendes erneutes Betätigen der Fixiereinrichtung erforderlich ist.

Im Zusammenhang mit den Erläuterungen der bisherigen Ausführungsbeispiele der erfindungsgemäßen Anhängekupplung wurde offen gelassen, wie der Kugelhals selbst nach Lösen der Fixierung in der jeweiligen Stellung bewegt werden soll.

Beispielsweise ist es im Rahmen einer einfachen Ausführung der erfindungsgemäßen Anhängekupplung denkbar, dass nach Lösen der Fixierung durch die Fixiereinrichtung in der jeweiligen Stellung ein manuelles Bewegen des Kugelhalses in die jeweils gewünschte Stellung erfolgt. Dies hat den Vorteil, dass hierdurch das manuelle Bewegen die Bedienungsperson den für die Bewegung erforderlichen Raum exakt beobachten kann und gegebenenfalls beim Auftreten von Hindernissen die Bewegungsrichtung ändern oder die Hindernisse ausräumen kann. Darüber hinaus hat diese Lösung ebenfalls den Vorteil, dass sie aufgrund der konstruktiven Einfachheit äußerst kostengünstig herstellbar ist.

Insbesondere ist es für diese Lösung von Vorteil, wenn sowohl die Ruhestellung als auch die Arbeitsstellung so angeordnet sind, dass der Kugelhals diese aufgrund der Wirkung der Schwerkraft selbsttätig verlässt, wenn die Fixierung durch die Fixiereinrichtung aufgehoben wird.

Eine besonders komfortable Lösung sieht vor, dass der Kugelhals durch einen elektrisch betreibbaren Schwenkantrieb von einer Stellung in die jeweils andere Stellung verschwenkbar ist.

Besonders günstig ist es beim Vorsehen eines Schwenkantriebs, wenn dieser eine Rutschkupplung umfasst, so dass Beschädigungen von Gegenständen oder Verletzungen von Bedienungspersonen durch den schwenkenden Kugelhals ausgeschlossen werden können.

Alternativ wäre es auch denkbar, Beschädigungen von Drittgegenständen durch Kollisionen des Kugelhalses mit diesen durch Stromüberwachung des elektrischen Antriebs und gegebenenfalls Abschaltung desselben zu verhindern.

Prinzipiell wäre es möglich, den Schwenkantrieb unmittelbar an der Kupplungseinheit anzuordnen. Aufgrund der Raumprobleme im Bereich der Kupplungseinheit ist es jedoch besonders zweckmäßig, wenn der Schwenkantrieb getrennt von der Kupplungseinheit am Kraftfahrzeug angeordnet ist und über ein Verbindungselement auf ein Schwenkteil der Kupplungseinheit wirkt, so dass der Schwenkantrieb selbst beliebig am Kraftfahrzeug angeordnet sein kann, beispielsweise in ohnehin vorhandenen Räumen unterhalb der Stoßstange oder im Kotflügelbereich oder im Kofferraum eines Kraftfahrzeugs.

Hinsichtlich der Ausbildung des Verbindungselements wäre es ebenfalls denkbar, dieses als Gestänge oder als feste Welle auszubilden. Besonders günstig ist es, wenn das Verbindungselement als flexibles Verbindungselement ausgebildet ist, beispielsweise als flexible Welle oder als Zugseil, insbesondere als Bowdenzug.

Besonders günstig lässt sich eine Drehbewegung dann übertragen, wenn das Verbindungselement zwei gegensinnig wirkende Zugstränge umfasst, so dass durch Ziehen am einen oder am anderen die unterschiedlichen Drehrichtungen für die Schwenkbewegungen in einfacher Weise übertragen werden können.

Hinsichtlich des Schwenkantriebs wäre es beispielsweise ebenfalls denkbar, insbesondere bei Zugsträngen, Zugmagneten einzusetzen. Um jedoch eine möglichst geringe Antriebsleistung einzusetzen, ist es besonders günstig, wenn der Schwenkantrieb durch einen Elektromotor antreibbar ist. Ein derartiger Elektromotor erlaubt es insbesondere aufgrund der Möglichkeit, ein Untersetzungsgetriebe einzusetzen, mit geringen elektrischen Leistungen die erforderlichen Kräfte für die Schwenkbewegung des Kugelhalses zu erzeugen. Besonders günstig ist es aus Sicherheitsgründen, wenn zwischen dem Schwenkantrieb und dem Elektromotor die Rutschkupplung vorgesehen ist.

Eine besonders günstige Lösung, bei welcher sowohl ein Löseantrieb als auch ein Schwenkantrieb vorgesehen ist, sieht vor, dass der Elektromotor für den Schwenkantrieb auch den Löseantrieb antreibt.

Insbesondere um beide Antriebe gleichzeitig antreiben zu können, ohne dass der Schwenkantrieb den Kugelhals stets dann dreht, wenn der Löseantrieb angetrieben ist, ist vorzugsweise vorgesehen, dass der Schwenkantrieb über die Rutschkupplung mit dem Elektromotor gekoppelt ist, so dass die Möglichkeit besteht, mittels des Elektromotors den Löseantrieb zum Betätigen der Fixiereinrichtung im Sinne eines Lösens anzutreiben, ohne dass ein Schwenken des Kugelhalses erfolgt, da in diesem Fall der Schwenkantrieb über die Rutschkupplung entkoppelt ist und erst nach Lösen der Fixierung des Kugelhalses die Rutschkupplung greift und über den Schwenkantrieb ein Verschwenken des Kugelhalses durchführt.

Besonders günstig lässt sich das erfindungsgemäße Ausführungsbeispiel einer Anhängekupplung dann realisieren, wenn eine Steuerung vorgesehen ist, welche nach einem einmaligen Betätigen eines Startschalters ein Betätigen der Fixiereinrichtung zum Aufheben der Fixierung in der jeweiligen Stellung und ein Verschwenken des Kugelhalses von der jeweiligen Stellung in die jeweils andere Stellung mit Fixieren des Kugelhalses in der jeweils anderen Stellung durch die Fixiereinrichtung steuert. Eine derartige Steuerung erlaubt es, einen optimalen Bedienungskomfort bei dem Einsatz der erfindungsgemäßen Anhängekupplung zu realisieren.

Eine besonders einfache und sichere Lösung sieht dabei vor, dass die Steuerung nach Betätigen des Startschalters den Elektromotor einschaltet und nach Erreichen der jeweils anderen Stellung zum Fixieren des Kugelhalses in dieser Stellung abschaltet. Diese Lösung erlaubt es, mit wenig Steuerungsaufwand sämtliche erfindungsgemäßen Funktionen zu erfüllen, insbesondere in optimaler Weise die mechanische, durch einen elastischen Kraftspeicher angetriebene Fixiereinrichtung zum Fixieren des Kugelhalses einzusetzen.

Ein weiteres vorteilhaftes Ausführungsbeispiel einer erfindungsgemäßen Anhängekupplung sieht vor, dass die Fixiereinrichtung zwei im Abstand voneinander am Schwenkteil angeordnete Anschlagelemente und zwei am Lagerteil angeordnete Stützelemente aufweist, und dass zum Fixieren des Kugelhalses in der Arbeitsstellung eines der Stützelemente und eines der Anschlagelemente im Sinne einer Schwenkbewegung des Kugelhalses in einer ersten Richtung zusammenwirken, welcher das andere der Stützelemente und das andere der Anschlagelemente entgegenwirken, und dass hierbei die Anschlagelemente und die Stützelemente spielfrei gegeneinander anlegbar sind.

Der Vorteil dieses Ausführungsbeispiels der erfindungsgemäßen Lösung ist darin zu sehen, dass durch das Vorsehen von zwei zusammenwirkenden Paaren aus Anschlagelementen und Stützelementen die Möglichkeit gegeben ist, diese paarweise spielfrei aneinander anzulegen und dadurch eine dauerhaft spielfreie und somit auch dauerhaft verschleißarme Fixierung des Schwenkteils relativ zum Lagerteil zu erhalten, wobei sich gezeigt hat, dass durch das spielfreie Aneinanderanliegen der zusammenwirkenden Paare aus jeweils einem der Anschlagelemente und Stützelemente höchste Verschleißarmut im Bereich derselben und somit auch bei der Fixierung des Schwenkteils erreichbar ist.

Besonders vorteilhaft ist es dabei, wenn zum Fixieren des Kugelhalses in der Arbeitsstellung die Anschlagelemente und die Stützelemente in einer Spannstellung gegeneinander verspannbar sind, wobei durch das zusätzliche Gegeneinanderverspannen der Paare aus jeweils einem der Anschlagelemente und Stützelemente die Möglichkeit geschaffen ist, selbst bei Materialdeformation aufgrund auftretender Lastspitzen die Spielfreiheit zu gewährleisten und somit auch die größte Verschleißarmut bei der Fixierung des Schwenkteils relativ zum Lagerteil zu erhalten.

Besonders günstig ist es dabei, wenn in der Spannstellung ein Element eines Paares aus jeweils einem der Stützelemente und Anschlagelemente in Spannkraftrichtung nachstellend auf das andere Element wirkt. Der Vorteil dieser Lösung ist darin zu sehen, dass einerseits durch die Kraftbeaufschlagung ein Verspannen der Stützelemente und Anschlagelemente gegeneinander möglich ist und andererseits durch das Nachstellen mindestens eines Elements erreicht ist, dass selbst dann, wenn das andere Element aufgrund von Materialelastizitäten beim Auftreten einer Spitzenlast in Richtung der Spannkraftwirkung ausweichen würde, das eine Element aufgrund seines Nachstellens die Spannkraftwirkung auf das andere Element aufrecht erhält und somit auch selbst bei einer elastischen Deformation im Bereich von Schwenkteil und Lagerteil und/oder des anderen Paares von jeweils einem der Stützelemente und Anschlagelemente und dadurch bedingtem Ausweichen des anderen Elements die Kraftbeaufschlagung und die Spielfreiheit bei allen Stützelementen und Anschlagelementen aufrecht erhalten wird.

Besonders zweckmäßig lässt sich die Kraftbeaufschlagung eines Elements eines aus einem Stützelement und einem Anschlagelement gebildeten Paars dadurch realisieren, dass in der Spannstellung auf eines der Elemente ein elastischer Spannkraftspeicher wirkt.

Konstruktiv besonders einfach ist eine Lösung, bei welcher der elastische Spannkraftspeicher als Federkraftspeicher ausgebildet ist.

Ferner lässt sich die Nachstellbarkeit des einen Elements dann besonders günstig realisieren, wenn dieses in Spannrichtung bewegbar gelagert ist.

Eine derartige bewegbare Lagerung eines der Elemente lässt sich entweder durch eine lineare Bewegbarkeit desselben oder mit einer aus einer Drehbewegung abgeleiteten linearen Bewegbarkeit des Elements realisieren.

Hinsichtlich der Bewegbarkeit der Anschlagelemente wurden bislang keine näheren Angaben gemacht. So sieht ein vorteilhaftes Ausführungsbeispiel vor, dass beim Schwenken des Schwenkteils um die Achse jedes der Anschlagelemente auf einer radial beabstandeten Bahn um die Schwenkachse umläuft. Damit ist es nicht notwendig, den Anschlagelementen eine eigene Bewegbarkeit zu verleihen, sondern die Anschlagelemente können unmittelbar mit dem Schwenkteil verbunden und mit diesem verschwenkbar angeordnet sein.

Besonders günstig ist es dabei, wenn die Anschlagelemente auf unterschiedlichen Bahnen um die Schwenkachse umlaufen, das heißt, wenn jedes der Anschlagelemente seine eigene Bahn hat, mit welcher es um die Schwenkachse umläuft. Damit ist in räumlicher Hinsicht eine besonders einfache Zuordnung der einzelnen Anschlagelemente hinsichtlich der mit diesen korrespondieren Stützelemente realisierbar.

Prinzipiell wäre es denkbar, auch die Anschlagelemente relativ zum Schwenkteil noch zusätzlich bewegbar zu gestalten, beispielsweise um das spielfreie Aneinanderanliegen der Anschlagelemente und der Stützelemente zu erreichen. Konstruktiv besonders einfach ist es jedoch, wenn ein erstes der Anschlagelemente als fest am Schwenkteil angeordnetes Element ausgebildet ist.

Noch vorteilhafter ist es, wenn auch das zweite der Anschlagelemente als fest am Schwenkteil angeordnetes Element ausgebildet ist.

Um einen möglichst großen Hebelarm zwischen der Achse, um welche das Schwenkteil schwenkbar ist, und dem jeweiligen Anschlagelement, das heißt dem Wirksamwerden der auf dieses wirkenden Kraft, zu erreichen, ist vorzugsweise vorgesehen, dass eines der Anschlagelemente an einem Kamm des Schwenkteils angeordnet ist, welcher von der Schwenkachse einen größeren Abstand aufweist als beispielsweise ein Lagerkörper des Schwenkteils, welcher einen Schwenkzapfen umgibt.

Um ferner ebenfalls die Tatsache auszunutzen, dass sich der Kugelhals von dem Schwenkteil weg erstreckt und sich somit zwangsläufig mit zunehmendem Radius von der Achse erstreckt, ist vorzugsweise vorgesehen, dass ein anderes der Anschlagelemente an einem sich an das Schwenkteil anschließenden Ansatz des Kugelhalses angeordnet ist.

Auch hinsichtlich der Anordnung der Stützelemente selbst wurden im Zusammenhang mit der bisherigen Erläuterung der einzelnen Ausführungsbeispiele keine näheren Angaben gemacht. So sieht ein vorteilhaftes Ausführungsbeispiel vor, dass ein erstes der Stützelemente in einem in Fahrtrichtung gesehenen rückwärtigen Bereich des Lagerteils angeordnet ist.

Ferner ist bei einem Ausführungsbeispiel vorzugsweise vorgesehen, dass ein zweites der Stützelemente in einem in Fahrtrichtung gesehen vorderen Bereich des Lagerteils angeordnet ist, während bei einem anderen Ausführungsbeispiel auch das zweite Stützelement im rückwärtigen Bereich des Lagerteils angeordnet ist.

Hinsichtlich der Bewegbarkeit der Stützelemente sind die unterschiedlichsten Lösungen denkbar. Beispielsweise wäre es denkbar, beide Stützelemente in Richtung auf die Anschlagelemente oder beide Anschlagelemente in Richtung auf die Stützelemente zu bewegen.

Eine besonders aufgrund ihrer konstruktiven Einfachheit bevorzugte Lösung sieht dabei vor, dass eines der Stützelemente als stets in die Bahn des entsprechenden Anschlagelements hineinragendes Stützelement am Lagerteil angeordnet ist und somit beispielsweise stets dann von dem Anschlagelement beaufschlagt ist, wenn dieses in der Arbeitsstellung steht.

Um gleichzeitig aber die Chance zu eröffnen, den Kugelhals von der Arbeitsstellung in die Ruhestellung schwenken zu können und wieder zurück, ist vorzugsweise vorgesehen, dass ein anderes der Stützelemente als von einer Freigabestellung in die Bahn des anderen Anschlagelements hinein bis zu einer Sperrstellung und umgekehrt bewegbares Stützelement am Lagerteil angeordnet ist.

Hinsichtlich der Bewegbarkeit des Stützelements von der Freigabestellung in die Sperrstellung sind die unterschiedlichsten Möglichkeiten denkbar. Eine Lösung sieht vor, dass das bewegbare Stützelement durch eine Linearverschiebung in die Bahn des Anschlagelements hineinbewegbar ist.

Eine andere bevorzugte Ausführungsform sieht vor, dass das bewegbare Stützelement in die Bahn des entsprechenden Anschlagelements hineinschwenkbar ist.

Hinsichtlich der gesamten Bewegbarkeit eines relativ zu der Bahn des entsprechenden Anschlagelements zwischen einer Sperrstellung und einer Freigabestellung bewegbaren Stützelements wurden bislang keine näheren Angaben gemacht. So ist vorzugsweise eine Betätigungseinrichtung für das Stützelement vorgesehen, welche dazu dient, das Stützelement für diese Bewegungen zu lagern und zu beaufschlagen.

Eine Realisierungsform einer derartigen Betätigungseinrichtung umfasst einen Stellkeil, um das in einer Führung bewegbar geführte Stützelement zwischen der Sperrstellung und der Freigabestellung zu bewegen.

Eine andere vorteilhafte Lösung sieht vor, dass die Betätigungseinrichtung ein Schwenklager und einen Schwenkantrieb für das bewegbare Stützelement umfasst.

Hinsichtlich der Möglichkeit, die Stützflächen an den entsprechenden Anschlagflächen anzulegen und in dieser Stellung gegeneinander zu verspannen, wurden hinsichtlich der Realisierung einer derartigen Verspannung bei den bisher beschriebenen Ausführungsbeispielen keine näheren Angaben gemacht. So sieht ein vorteilhaftes Ausführungsbeispiel vor, dass zum Verspannen der Anschlagelemente und der Stützelemente miteinander ein Verspanngetriebe vorgesehen ist, mit welchem mindestens eines der Stützelemente oder mindestens eines der Anschlagelemente von einer Lösestellung in eine Spannstellung und umgekehrt bewegbar ist.

Ein derartiges Verspanngetriebe kann in unterschiedlichster Art und Weise ausgebildet sein. Beispielsweise könnte das Verspanngetriebe so ausgebildet sein, dass es sich auch bei der auf dieses wirkenden Reaktionskraft beim Verspannen der Anschlagelemente und Stützelemente miteinander aus der verspannenden Stellung entgegengesetzt hierzu in Richtung der Lösestellung bewegen kann.

Besonders günstig ist es jedoch, insbesondere um dauerhaft das Auftreten von Spiel zu vermeiden, wenn das Verspanngetriebe selbsthemmend ausgebildet ist, so dass die Reaktionskraft der aneinanderanliegenden Anschlagelemente und Stützelemente nicht dazu führen kann, dass sich das Verspanngetriebe aufgrund dieser Kraftwirkung in Richtung der Lösestellung verstellt.

Eine einfache Möglichkeit, das Verspanngetriebe zu realisieren wäre die, dass das Verspanngetriebe als Keilgetriebe ausgebildet ist. Ein Keilgetriebe stellt die einfachste Realisierungsmöglichkeit eines Verspanngetriebes dar, insbesondere wenn dieses selbsthemmend ausgebildet sein soll.

Konstruktiv besonders einfach lässt sich dabei ein Keilgetriebe realisieren, welches als Verschiebekeilgetriebe ausgebildet ist.

Eine andere Möglichkeit, ein Verspanngetriebe zu realisieren ist die, das Verspanngetriebe als Exzentergetriebe auszubilden, da ein Exzentergetriebe den Vorteil hat, dass es sich in einfacher Weise durch eine Hebelwirkung betätigen lässt.

Dabei ist das Exzentergetriebe ebenfalls so ausbildbar, dass dieses selbsthemmend ist.

Hinsichtlich der Wirkung des Verspanngetriebes beim Verspannen der Anschlagelemente und Stützelemente relativ zueinander wurden bislang keine näheren Angaben gemacht. So wäre es beispielsweise denkbar, beide Verspannelemente oder beide Stützelemente durch das Verspanngetriebe relativ zueinander somit aufeinander zu oder voneinander weg durch ein Verspanngetriebe zu bewegen.

Beispielsweise wäre dies dadurch möglich, dass eine durch das Spanngetriebe mögliche Relativbewegung zwischen der Einheit aus Schwenkteil und Kugelhals und dem Lagerteil durch das Verspanngetriebe ermöglicht wird.

Beispielsweise wäre dies dadurch realisierbar, dass der Lagerbolzen des Schwenkteils als Exzenterbolzen ausgebildet ist und mit diesem Exzenterbolzen ein Verspannen der Anlageelemente relativ zu den Stützelementen möglich ist.

Eine andere Realisierungsmöglichkeit wäre die, eines der Anschlagelemente relativ zu dem entsprechenden Stützelement zu bewegen.

Besonders günstig ist es jedoch, da die Stützelemente am Lagerteil angeordnet sind, wenn durch das Verspanngetriebe eines der Stützelemente in Richtung des entsprechenden Anlageelements bewegbar ist.

Im Fall eines Keilgetriebes, insbesondere eines Verschiebekeilgetriebes, heißt dies, dass ein Spannkeil mit dem Stützelement zusammenwirkt, um dieses von der Lösestellung in die Spannstellung zu bewegen.

Im Fall eines Exzentergetriebes ist dies dadurch realisierbar, dass das Exzentergetriebe auf eines der Stützelemente wirkt und dieses in Richtung auf das entsprechende Anschlagelement verschiebt.

Beispielsweise wäre dies dadurch realisierbar, dass das ohnehin in die Bahn des entsprechenden Anschlagelements hinein oder aus dieser herausbewegbare Stützelement ebenfalls durch das Exzentergetriebe bewegbar gelagert ist.

Konstruktiv besonders günstig ist eine Lösung, bei welcher das bewegbare Stützelement über das Exzentergetriebe einerseits zur Durchführung einer Spannbewegung verschiebbar und andererseits am Exzentergetriebe zum Einschwenken in die Bahn oder Ausschwenken aus der Bahn des entsprechenden Anschlagelements verschwenkbar gelagert ist.

Eine zweckmäßige Ausführung sieht dabei vor, dass das Exzentergetriebe eine drehbar gelagerte Welle und ein exzentrisch zu dieser angeordnetes Schwenklager für das Stützelement aufweist, durch welches das Stützelement von der Sperrstellung in die Freigabestellung und umgekehrt verschwenkbar ist.

Besonders günstig ist es, wenn die Betätigungseinrichtung auch das Verspanngetriebe umfasst, so dass bei Bedienen der Betätigungseinrichtung nicht nur das Bewegen des Stützelements zwischen der Sperrstellung und der Freigabestellung möglich ist, sondern auch das Bewegen desselben von der Spannstellung in die Lösestellung und umgekehrt.

Eine bevorzugte Ausführungsform einer derartigen Betätigungseinrichtung sieht vor, dass diese zum Fixieren des Schwenkteils in der Arbeitsstellung das bewegbare Stützelement von der Freigabestellung in die Sperrstellung bewegt und nach Erreichen der Sperrstellung das Verspanngetriebe von der Lösestellung in die Sperrstellung überführt und zum Freigeben des Schwenkteils das Verspanngetriebe von der Spannstellung in die Lösestellung überführt und dann das Stützelement von der Sperrstellung in die Freigabestellung bewegt.

Vorzugsweise ist die Betätigungseinrichtung so ausgebildet, dass sie das bewegbare Stützelement zwangsgesteuert von der Freigabestellung in die Sperrstellung und insbesondere auch umgekehrt bewegt.

Ferner ist es vorteilhaft, wenn die Betätigungseinrichtung auch das Verspanngetriebe zwangsgesteuert von der Lösestellung in die Spannstellung und insbesondere auch umgekehrt bewegt.

Alle zwangsgesteuerten Bewegungen haben den Vorteil, dass mit diesen sichergestellt werden kann, dass eine Betätigung der Betätigungseinrichtung dann letztlich auch dazu führt, dass die erwünschte Endstellung auch erreicht wird.

Insbesondere ist eine Zwangssteuerung auch dann vorteilhaft, wenn von der Spannstellung in die Lösestellung übergegangen werden kann, da damit auch ein Festklemmen des jeweiligen Stützelements überwunden werden kann.

Besonders leicht lässt sich die erfindungsgemäße Anhängekupplung dann betätigen, wenn die Betätigungseinrichtung ein einziges Antriebselement aufweist, bei dessen Betätigung das bewegbare Stützelement in jede der die Freigabestellung, die Sperrstellung, die Lösestellung und die Spannstellung umfassenden Stellungen bringbar ist.

Eine Lösungsmöglichkeit hierzu sieht vor, dass die Betätigungseinrichtung zwei nacheinander in eine auf das Stützelement wirkende Stellung bringbare Keilelemente aufweist, wobei beispielsweise eines der Keilelemente zum Überführen des Stützelements von der Freigabestellung in die Sperrstellung und das andere der Keilelemente zum Überführen des Stützelements von der Lösestellung in die Spannstellung dient.

Eine Alternative hierzu sieht vor, dass die Betätigungseinrichtung ein Schaltwerk aufweist, mit welchem die Betätigung des Verspanngetriebes mit der Schwenkbewegung des Stützelements zwischen der Freigabestellung und der Sperrstellung koppelbar ist.

Um eine für das Bedienen der Betätigungseinrichtung zum Erreichen der Sperrstellung und der Spannstellung erforderliche Kraft zu erzeugen, ist vorzugsweise eine Spannkrafterzeugungseinheit vorgesehen, welche mit der Betätigungseinrichtung zusammenwirkt und welche die Betätigungseinrichtung im Sinne einer Betätigung in Richtung der Sperrstellung des Stützelements und der Spannstellung des Verspanngetriebes mit einer Kraft beaufschlagt.

Der Vorteil dieser Lösung ist, dass durch die Kraft ständig die Betätigungseinrichtung derart beaufschlagt ist, dass diese die Tendenz hat, in die Sperrstellung und sogar noch darüber hinaus in die Spannstellung überzugehen, so dass die Anhängekupplung stets selbständig die Tendenz hat, in eine den Kugelhals sicher fixierende Stellung überzugehen, sobald dieser in Arbeitsstellung steht.

Vorzugsweise ist dabei die Spannkrafterzeugungseinheit so ausgebildet, dass sie einen Kraftspeicher aufweist, welcher die Betätigungseinrichtung zum Erreichen der Sperrstellung und der Spannstellung beaufschlagt und welchem zum Erreichen der Lösestellung und der Freigabestellung entgegenzuwirken ist.

Um zusätzliche Sicherheit gegen ein Lösen der Anhängevorrichtung und insbesondere ein Entfernen des Stützelements aus der Sperrstellung zu schaffen ist vorzugsweise vorgesehen, dass die Spannkrafterzeugungseinheit mit einer Blockiereinrichtung versehen ist, welche bei einer Nichtbetätigung derselben um dem Spannkraftspeicher entgegenzuwirken, ein Verlassen der Sperrstellung in Richtung der Freigabestellung blockiert.

Vorzugsweise ist die Blockiervorrichtung dabei so ausgebildet, dass sie zuerst gelöst werden muss, bevor die Möglichkeit besteht, dem Spannkraftspeicher entgegenzuwirken.

Eine besonders günstige konstruktive Lösung sieht vor, dass die Blockiereinrichtung bei Betätigung der Spannkrafterzeugungseinheit zum Erreichen der Freigabestellung lösbar ist und somit automatisch eine derartige Bewegung in Richtung der Freigabestellung bei Betätigung der Spannkrafterzeugungseinheit möglich ist.

Um die Bedienung der Spannkrafterzeugungseinheit möglichst vorteilhaft zu gestalten, ist vorzugsweise vorgesehen, dass die Spannkrafterzeugungseinheit ein Bedienelement aufweist, mit welchem zuerst die Blockiereinrichtung lösbar und dann mit einer Entriegelungskraft auf die Betätigungseinrichtung einwirkbar ist.

Mit dieser Ausbildung der Spannkrafterzeugungseinheit ist die Möglichkeit geschaffen worden, eine zusätzliche Sicherung gegen ein Lösen des bewegbaren Stützelements aus der Sperrstellung zu schaffen.

Hinsichtlich der Anordnung der Betätigungseinrichtung an dem Lagerteil wurden im Zusammenhang mit der bisherigen Erläuterung der einzelnen Ausführungsbeispiele keine näheren Angaben gemacht. So wäre es beispielsweise denkbar, die verschiedenen Elemente der Betätigungseinrichtung in unterschiedlicher Weise beispielsweise am Lagerteil zu lagern.

Eine besonders günstige Lösung sieht jedoch vor, dass die Betätigungseinrichtung und das bewegbare Stützelement eine Baugruppe bildet, die als Ganzes an dem Lagerteil montierbar ist.

Das Vorsehen einer separaten, am Lagerteil zu montierenden und von diesem unabhängigen Baugruppe schafft ferner die Möglichkeit, die Betätigungseinrichtung mitsamt dem bewegbaren Stützelement an dem Lagerteil justierbar anzuordnen, so dass die Möglichkeit besteht, mit der Montage der Betätigungseinrichtung eine gleichzeitige Justierung derselben und mit dieser eine Justierung des von dieser gehaltenen Stützelements relativ zum Lagerteil vorzunehmen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht einer ersten Bauart einer Kupplungseinheit für eine erfindungsgemäße Anhängekupplung von hinten;
- Fig. 2: einen Schnitt längs Linie 2-2 in Fig. 1;
- Fig. 3: einen Schnitt längs Linie 3-3 in Fig. 1;
- Fig. 4: einen ausschnittsweise vergrößerten Schnitt in dem Bereich A in Fig. 3;
- Fig. 5: einen Längsschnitt durch eine Spannkrafterzeugungseinheit für eine erfindungsgemäße Anhängekupplung in nicht betätigter Stellung;
- Fig. 6: einen Querschnitt ähnlich Fig. 5 bei beginnender Betätigung der Spannkrafterzeugungseinheit;
- Fig. 7: einen Schnitt ähnlich Fig. 5 bei voll betätigter Spannkrafterzeugungseinheit;
- Fig. 8: eine perspektivische Ansicht einer zweiten Bauart einer Kupplungseinheit für eine erfindungsgemäße Anhängekupplung von vorne;
- Fig. 9: eine perspektivische Ansicht der zweiten Bauart der Kupplungseinheit in Richtung des Pfeils B in Fig. 8;
- Fig. 10: eine Darstellung eines Lagerteils der zweiten Bauart entsprechend der Ansicht in Fig. 9;
- Fig. 11: eine Darstellung der zweiten Bauart der Kupplungseinheit ohne Lagerteil mit Blick in Richtung C in Fig. 8 bei in Arbeitsstellung stehendem Kugelhals;
- Fig. 12: eine perspektivische Darstellung ähnlich Fig. 8 des zweiten Ausführungsbeispiels der Anhängekupplung ohne Lagerteil, jedoch in Freigabestellung des zweiten Stützelements;
- Fig. 13: einen Schnitt längs Linie 13-13 in Fig. 12;
- Fig. 14: eine Darstellung ähnlich Fig. 12 bei in Sperrstellung und Spannstellung stehendem zweitem Stützelement;
- Fig. 15: eine perspektivische Darstellung ähnlich Fig. 14 bei in Lösestellung, jedoch noch in Sperrstellung stehendem zweiten Stützelement;
- Fig. 16: eine Ansicht ähnlich Fig. 15 nach Verlassen der Arbeitsstellung des Kugelhalses und durch die Spannkrafterzeugungseinheit beaufschlagtem zweitem Stützelement;
- Fig. 17: eine Darstellung ähnlich Fig. 16 bei in Ruhestellung stehendem Kugelhals und in entsprechender Stellung stehendem Stützelement;
- Fig. 18: eine perspektivische Darstellung ähnlich Fig. 14 beim Bewegen des zweiten Stützelements in Richtung der Sperrstellung, jedoch unmittelbar vor Erreichen derselben und noch vorhandener Lösestellung des zweiten Stützelements;
- Fig. 19: ein erstes Ausführungsbeispiel einer erfindungsgemäßen Anhängekupplung mit einem Löseantrieb für eine Fixiereinrichtung einer Kupplungseinheit;
- Fig. 20: einen teilweisen Schnitt längs Linie 20-20 durch den Löseantrieb in Fig. 19;
- Fig. 21: eine Variante des ersten Ausführungsbeispiels der Anhängekupplung teilweise geschnitten;
- Fig. 22: eine perspektivische Ansicht eines zweiten Ausführungsbeispiels einer erfindungsgemäßen Anhängekupplung von einer Rückseite eines Kraftfahrzeugs aus;
- Fig. 23: eine perspektivische Ansicht in Richtung des Pfeils X in Fig. 22;
- Fig. 24: eine Explosionsdarstellung einer Antriebseinheit des zweiten Ausführungsbeispiels der erfindungsgemäßen Anhängekupplung umfassend einen Löseantrieb und einen Schwenkantrieb;
- Fig. 25: eine Darstellung einer flexiblen Verbindung zwischen Schwenkantrieb und Kupplungseinheit;
- Fig. 26: eine schematische Darstellung der einzelnen Abläufe beim Schwenken des zweiten Ausführungsbeispiels der erfindungsgemäßen Anhängekupplung von der Ruhestellung in die Arbeitsstellung (Fig. 26a - Fig. 26c) und von der Arbeitsstellung in die Ruhestellung (Fig. 26d - Fig. 26f).

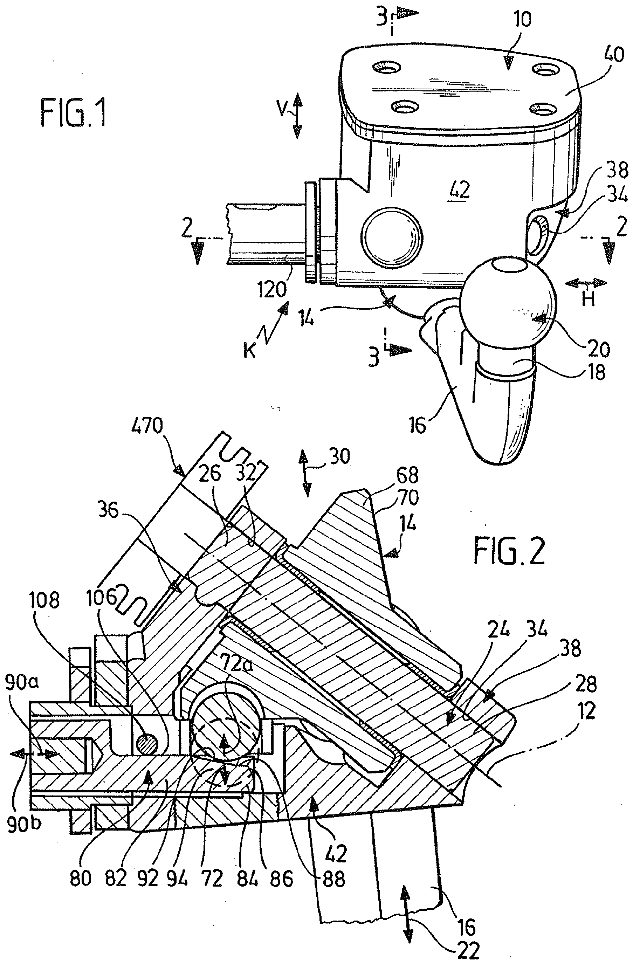

Eine erste Bauart einer Kupplungseinheit K für eine erfindungsgemäßen Anhängekupplung, dargestellt in den Fig. 1 bis 3, umfasst ein fest am Fahrzeug montierbares Lagerteil 10, welches beispielsweise an einer fest mit der Karosserie zu verbindenden Querstrebe montierbar ist und ein um eine Schwenkachse 12 relativ zum Lagerteil 10 verschwenkbares Schwenkteil 14, an welchem ein Kugelhals 16 gehalten ist, der an seinem dem Schwenkteil 14 abgewandten und gekrümmten Ende 18 eine als Ganzes mit 20 bezeichnete Kupplungskugel trägt.

Die Schwenkachse 12 ist dabei eine sowohl gegenüber einer Vertikalen V als auch gegenüber einer Horizontalen H und einer Fahrzeuglängsrichtung 30 geneigte Achse, beispielsweise wie in der deutschen Patentanmeldung 196 12 959.1 beschrieben.

Dadurch ist der Kugelhals 16, von einer Arbeitsstellung, in welcher sich dessen Längsrichtung 22 ungefähr parallel zur Längsrichtung 30 des Kraftfahrzeugs erstreckt in eine Ruhestellung schwenkbar, in welcher die Längsrichtung 22 ungefähr quer zur Längsrichtung 30 des Fahrzeugs steht und die Kupplungskugel 20 nach unten zur Fahrbahn weist, während in der Arbeitsstellung die Kupplungskugel 20 aufgrund des gekrümmten Endes 18 des Kugelhalses 16 in bekannter Art und Weise nach oben weist.

Zur verschwenkbaren Lagerung des Schwenkteils 14 um die Schwenkachse 12 ist dieses an einem Lagerbolzen 24 gelagert, welcher mit seinen einander gegenüberliegenden Enden 26 und 28 in Lagerbohrungen 32 und 34 von Lagerflanschen 36 und 38 des Lagerteils 10 eingreift. Diese Lagerflansche 36 und 38 erstrecken sich ausgehend von einer Montageplatte 40 des Lagerteils 10 nach unten, vorzugsweise in Richtung zur Fahrbahn und sind durch eine Rückwand 42 des Lagerteils 10, welche sich ebenfalls von der Montageplatte 40 in gleicher Richtung wie die Lagerflansche 36 und 38 erstreckt, miteinander verbunden.

Aufgrund der Ausrichtung der Schwenkachse 12 schräg zur Längsrichtung 30 des Kraftfahrzeugs und schräg zur Vertikalen V und zur Horizontalen H erstrecken sich auch die Lagerflansche 36 und 38 schräg zur Längsrichtung 30 des Kraftfahrzeugs.

Zur Fixierung des Kugelhalses 16 in der in Fig. 1 bis 3 dargestellten Arbeitsstellung, ist an dem Lagerteil 10, und zwar in einem unteren Bereich der Rückwand 42 desselben, ein erstes Stützelement 50 vorgesehen, welches eine erste Stützfläche 52 aufweist, die dem in Arbeitsstellung stehenden Kugelhals 16 zugewandt ist und an welcher eine erste Anschlagfläche 54 anlegbar ist, welche an einem als erstes Anschlagelement ausgebildeten und dem Stützelement 50 in der Arbeitsstellung zugewandten Ansatz 56 des Kugelhalses 16, welcher sich im wesentlichen unmittelbar an das Schwenkteil 14 anschließt, angeordnet ist und auch einer Bahn 55 um die Schwenkachse 12 bewegbar ist.

Das erste Stützelement 50 und das erste Anschlagelement 56 begrenzen somit eine Schwenkbewegung des Kugelhalses 16 in Richtung einer Schwenkrichtung 58 um die Schwenkachse 12, welcher der Schwenkrichtung 58 des Kugelhalses 16 von der Ruhestellung in die Arbeitsstellung entspricht.

Als zweites, am Lagerteil 10 angeordnetes Stützelement 60 dient eine am Lagerteil 10 verschieblich geführt gelagerte Verriegelungskugel 60, welche mit einer Kugelfläche 62 als zweite Stützfläche auf eine zweite kalottenähnlich ausgebildete Anschlagfläche 64 einer in dem Schwenkteil 14 angeordneten und ein zweites Anschlagelement bildenden Ausnehmung 66 wirkt, wobei die Ausnehmung 66 in einem Kammbereich 68 des Schwenkteils 14 angeordnet ist, welcher einen möglichst großen radialen Abstand von der Schwenkachse 12 aufweist und auf einer Bahn 65, die einen größeren Radius aufweist als die Bahn 55, um die Schwenkachse 12 bewegbar ist.

Vorzugsweise umfasst das Schwenkteil 14 einen den Lagerbolzen 24 umgebenden Lagerkörper 71 und einen von diesem aus sich radial erstreckenden kegelstumpfähnlichen Abschnitt, welcher den Kammbereich 68 bildet, wobei in einer Kegelmantelfläche 70 des kegelstumpfähnlichen Abschnitts die Ausnehmung 66 angeordnet ist.

Die zweite Stützfläche 62 verläuft dabei vorzugsweise schräg zu einer Bewegungsrichtung 72 des vorzugsweise linear bewegbaren als Verriegelungskugel 60 ausgebildeten zweiten Stützelements und liegt an einem ebenfalls schräg zur Bewegungsrichtung verlaufenden Bereich der Kugelfläche 74 der Verriegelungskugel 60 an, wobei die Anschlagfläche 64 und die Stützfläche 62 so zusammenwirken, dass das Schwenkteil 14 nach einer ersten Berührung der Anschlagfläche 64 und der Stützfläche 62 und Weiterbewegen der Verriegelungskugel 60 in einer Spannrichtung 72a auf die Anschlagfläche zu ein derartiges Drehmoment um die Achse 12 erfährt, welches eine Bewegung des Kugelhalses 14 in der Schwenkrichtung 58 bewirkt, die durch das erste Stützelement 50 und das erste Anschlagelement 56 dann begrenzt verhindert wird, wenn diese aneinander anliegen.

In dem Moment, in dem das erste Stützelement 50 und das erste Anschlagelement 56 aneinander Anliegen und außerdem das zweite Stützelement, nämlich die Verriegelungskugel 60 mit einer Spannkraft in der Spannrichtung 72a auf das zweite Anschlagelement 66 wirkt, ist eine Spannstellung erreicht, in welcher die erste Stützfläche 52 an der ersten Anschlagfläche 54 und die zweite Stützfläche 62 an der zweiten Anschlagfläche mit der Spannkraft gegeneinander wirken.

Alles in allem wirken somit die Stützelemente 50 und 60 sowie die Anschlagelemente 56 und 66 gemeinsam derart, dass die erste Stützfläche 52 an der ersten Anschlagfläche 54 und die zweite Stützfläche 62 an der zweiten Anschlagfläche 64 stets spielfrei anliegen und den Kugelhals 16 spielfrei in seiner Arbeitsstellung halten, wobei - wie nachfolgend noch im einzelnen dargelegt - sogar ein Verspannen der Anschlagflächen 54, 64 gegenüber den Stützflächen 52, 62 erfolgt.

Um das als Verriegelungskugel ausgebildete zweite Stützelement 60 in Richtung seiner Bewegungsrichtung 72 zu führen, ist eine Führungsbüchse 74 vorgesehen, welche am Lagerteil 10 fixiert ist und vorzugsweise in einer für diese vorgesehenen Ausnehmung in der Rückwand 42 eingesetzt ist.

Die Verriegelungskugel 60 ist durch eine als Ganzes mit 80 bezeichnete Betätigungseinrichtung, umfassend ein Verschiebekeilgetriebe mit einem Keilkörper 82, von einer in Fig. 2 gestrichelt dargestellten Freigabestellung in der in Fig. 2 durchgezogen gezeichnete Sperrstellung bewegbar, wobei die Verriegelungskugel 60 in der Freigabestellung so weit von der Ausnehmung 66 weg verschoben ist, dass die Ausnehmung 66 auf ihrer durch die Schwenkachse 12 vorgegebenen Bahn 65 frei bewegbar ist, während die Verriegelungskugel 60 in der Sperrstellung in die Ausnehmung 66 eingreift und somit die Bewegung der Ausnehmung 66 längs der Bahn 65 blockiert.

Zum Verschieben der Verriegelungskugel 60 von der Freigabestellung in die Sperrstellung umfasst der Keilkörper 82 einen frontseitig desselben angeordneten Stellkeil 84 mit einer Stellschräge 86, welche dazu dient, die Verriegelungskugel 60 von der Freigabestellung aus in eine Sperrstellung zu bewegen, welche bereits dann erreicht ist, wenn die Verriegelungskugel 60 auf einer Sicherungsfläche 88, aufliegt, die parallel zu einer Verschieberichtung 90 des Verschiebekeils 82 verläuft, im Gegensatz zu der schräg zur Verschieberichtung 90 verlaufenden Stellschräge 86. An diese Sicherungsfläche 88 schließt sich auf einer der Stellschräge 86 gegenüberliegenden Seite eine Spannschräge 92 eines Spannkeils 94 des Keilkörpers 82 an, welche dazu dient, die Verriegelungskugel 60 ausgehend von einer in der Sperrstellung vorliegenden Lösestellung, die dann gegeben ist, wenn die Stützfläche 62 noch mit Spiel bezüglich der Anschlagfläche 64 angeordnet ist, in der Spannrichtung 72a zu bewegen und dabei mit der Stützfläche 62 an der Anschlagfläche 64 anzulegen und darüber hinaus mit großer Kraft in der Spannrichtung 72a weiter zu beaufschlagen, so dass die Stützfläche 62 mit ebenfalls großer Kraft gegen die Anschlagfläche 64 wirkt und dieser so lange folgt, bis ein Verspannen des Schwenkteils 14 in der Arbeitsstellung des Kugelhalses 16 erreicht ist.

Die Sicherungsfläche 88 dient außerdem dazu, den Keilkörper 82 gegen eine Bewegung in der Verschieberichtung 90 zu sichern, in welcher der Verschiebekeil bei großer Belastung der Verriegelungskugel 60 ein Bewegen aus der Spannstellung heraus in Richtung der Lösestellung aufgrund der Form der Spannschräge 92 zulässt. Wird aufgrund der Form der Spannschräge 92 durch große Kraftbeaufschlagung der Verriegelungskugel 60 durch das Schwenkteil 14 der Keilkörper 82 entgegengesetzt zur Spannrichtung 90a in Löserichtung 90b zurückgeschoben, so ist ein weiteres Zurückschieben des Verschiebekeils 82 aufgrund der Sicherungsfläche 88 nicht möglich, da ein Beaufschlagen derselben durch die Verriegelungskugel 60 aufgrund des zur Verschieberichtung 90 parallelen Verlaufs nicht zu einer weiteren Verschiebung des Keilkörpers 82 entgegengesetzt zur Spannrichtung führt. Damit hält der Keilkörper 82 bei auf der Sicherungsfläche 88 aufliegender Verriegelungskugel 60 diese immer noch in einer Sperrstellung, in welcher eine freie Drehbarkeit des Schwenkteils 14 durch die Kugel 60 verhindert wird, so dass nach wie vor der Kugelhals 16 die Arbeitsstellung nicht verlassen kann, lediglich in der Arbeitsstellung nicht mehr spielfrei fixiert ist.

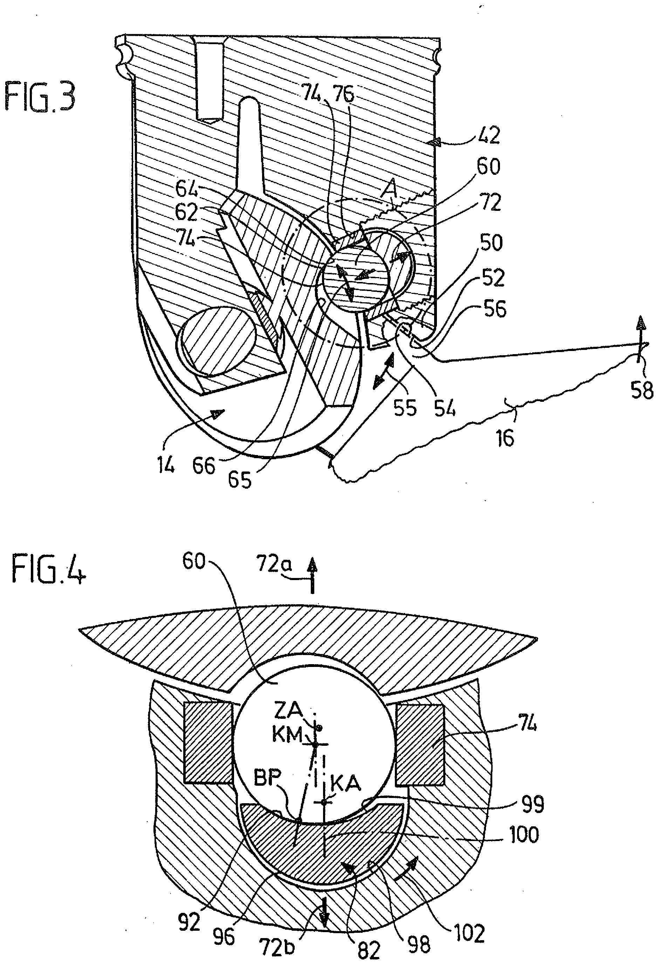

Um zu verhindern, dass der Keilkörper 82 durch die auf die Spannschräge 92 wirkende Verriegelungskugel 60 sich leicht entgegengesetzt zur Spannrichtung 90a verschieben lässt, ist vorzugsweise, wie in Fig. 4 dargestellt, der Keilkörper 82 auf seiner der Spannschräge 92, der Sicherungsfläche 88 und der Stellschräge 86 abgewandten Seite mit einer halbzylindrischen Anlagefläche 96 versehen, welche in einer ebenfalls halbzylindrisch ausgebildeten Führungsfläche 98 in der Rückwand 42 des Lagerteils 10 liegt, so dass der Keilkörper 82 die Möglichkeit hat, sich um eine eine Zylinderachse der Anlagefläche 96 und der Führungsfläche 98 darstellende Keilkörperachse KA, welche parallel zur Verschieberichtung 90 verläuft, zu drehen, sofern eine bezüglich der Keilachse KA asymmetrische Beaufschlagung des Verschiebekeils 82 erfolgt.

Die Spannschräge 92 ist ihrerseits ebenfalls als teilzylindrische Fläche 99 ausgebildet, welche einen Radius aufweist, der größer als der Radius der Verriegelungskugel 60 ist, wobei eine Zylinderachse ZA derselben gegenüber einer Mittelebene 100 des Verschiebekeils 82, welche durch die Keilachse KA hindurchverläuft, seitlich versetzt angeordnet ist.

Die Verriegelungskugel 60 wird im Gegensatz dazu von der Führungsbüchse 74 in der Bewegungsrichtung 72, mit dem Kugelmittelpunkt KM so geführt, dass der Kugelmittelpunkt KM gegenüber der Mittelebene 100 des Verschiebekeils 82 noch mehr seitlich versetzt ist als die Zylinderachse ZA, so dass auch ein Berührungspunkt BP zwischen der Verriegelungskugel 60 und der Fläche 99 seitlich der Mittelebene 100 liegt. Dadurch führt eine Beaufschlagung der Verriegelungskugel 60 in einer Richtung 72b von der Sperrstellung weg dazu, dass der Keilkörper 82 durch den Berührungspunkt BP seitlich der Mittelebene 100 beaufschlagt ist und somit aufgrund der Form der Anlagefläche 96 und der Führungsfläche 98 das Bestreben hat, sich um die Keilachse KA in Richtung 102 zu verdrehen.

Eine Sicherung des Keilkörpers 82 gegen ein Verdrehen erfolgt, wie in Fig. 2 dargestellt durch eine sich parallel Verschieberichtung 90 des Keilkörpers 82 erstreckende und auf einer der Sicherungsfläche 88 gegenüberliegende Seite der Spannschräge 92 angeordnete Flachseite 106 des Keilkörpers 82, welche an einem sich quer zur Verschieberichtung 90 über die Flachseite 106 erstreckenden Verdrehsicherungselement 108 in Form eines sich quer zur Verschieberichtung 90 erstreckenden Stiftes 108 geführt ist und somit gegen ein Verdrehen gesichert ist.

Durch die Beaufschlagung des Keilkörpers 82 im Berührungspunkt BP und der dadurch bewirkten Tendenz des Keilkörpers 82 sich in Richtung 102 zu verdrehen legt sich die Flachseite 106 nicht mehr über ihre Breite quer zur Verschieberichtung 90 an dem Verdrehsicherungselement 108 an, sondern nur noch auf einer Seite, wodurch sich der Keilkörper 82 reibungserhöhend mit dem Verdrehsicherungselement 108 verkeilt so dass durch diese erhöhte Reibung ein Zurückgleiten des Keilkörpers 82 entgegengesetzt zur Spannrichtung 90a, das heißt in Richtung 90b, erschwert wird.

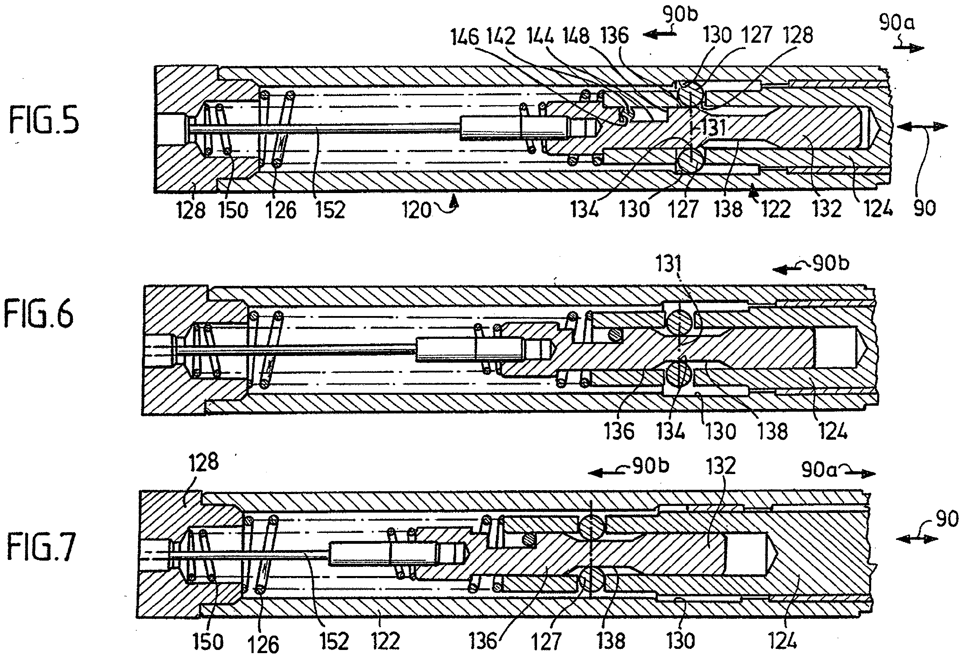

Zur Betätigung der Betätigungseinrichtung 80 mit dem Keilkörper 82 und zur Erzeugung der in Spannrichtung 90a auf den Keilkörper 82 wirkenden Spannkraft ist eine in den Fig. 5 bis 7 dargestellte Spannkrafterzeugungseinheit 120 vorgesehen.

Die Spannkrafterzeugungseinheit 120 umfasst ein Gehäuse 122, vorzugsweise ausgebildet als Gehäuserohr, in welchem ein Spannkörper 124 in der Richtung 90 verschiebbar gelagert ist.

Der Spannkörper 124 ist dabei von einer Spannfeder 126 beaufschlagt, welche sich an einem Gehäusedeckel 128 abstützt, der das Gehäuse 122 auf einer dem Spannkörper 124 gegenüberliegenden Seite verschließt.

Zur zusätzlichen Sicherung einer Bewegung des Spannkörpers 124 in einer zur Spannrichtung 90a entgegengesetzten Richtung ist dieser mit einem Satz von Sperrkörpern 127 versehen, welche in Querbohrungen 128 im Spannkörper 124 geführt und in diesen quer zur Verschieberichtung 90 des Verschiebekeils 82 bewegbar sind. Sind die Sperrkörper 127 so weit relativ zum Spannkörper 124 verschoben, dass sie in Richtung des Gehäuses 122 über diesen überstehen, so können sie in eine im Gehäuse 122 vorgesehene Tasche 130 eingreifen, und durch ihr Eingreifen in die Tasche 130 eine Bewegung des Spannkörpers 124 entgegengesetzt zur Spannrichtung 90a blockieren.

Um die Sperrkörper 127 in dieser die Bewegungen des Spannkörpers 124 blockierenden Stellung zu halten, ist in dem Spannkörper 124 ein Betätigungskörper 132 vorgesehen, an welchem die Sperrkörper 127 mit ihren dem Gehäuse 122 abgewandten Innenflächen 134 anliegen. Der Betätigungskörper 132 weist dabei einerseits Betätigungsflächen 136 auf, welche die Sperrkörper 127 in ihrer blockierenden, das heißt über den Spannkörper 124 überstehenden und in die Taschen 130 eingreifenden Stellung halten und im Anschluss an die Betätigungsfläche 136 angeordnete Freigabeflächen 138, welche gegenüber den Betätigungsflächen 136 in der Querrichtung 131 so weit zurückgesetzt sind, dass dann, wenn die Sperrkörper 127 mit ihren Innenflächen 134 an der Freigabefläche 136 anliegen, die Sperrkörper 127 nicht mehr über den Spannkörper 124 in Richtung des Gehäuses 122 überstehen und somit nicht mehr in die Taschen 130 eingreifen. In dieser Stellung des Betätigungskörpers 132 ist auch der Spannkörper 124 frei in der Verschieberichtung 90 bewegbar.

Der Betätigungskörper 132 ist nun relativ zum Spannkörper 124 begrenzt bewegbar, beispielsweise definiert durch einen Anschlagstift 142, welcher in einer sich in Verschieberichtung 90 erstreckenden Ausnehmung 144 im Betätigungskörper 132 eingreift und eine Verschiebbarkeit des Betätigungskörpers 132 relativ zum Spannkörper 124 zulässt welche durch die Erstreckung der Ausnehmung 144 zwischen diese begrenzenden Anschlagflächen 146 und 148 definiert ist.

Ferner ist der Betätigungskörper 132 noch durch eine Stellfeder 150 ebenfalls in Richtung 90a beaufschlagt, welche dazu führt, dass der Betätigungskörper 132 stets die Tendenz hat, sich im Spannkörper 124 soweit in Richtung 90a zu bewegen, dass die Betätigungsflächen 136 auf die Sperrkörper 127 wirken und diese in ihre die Verschiebung des Spannkörpers 124 blockierende Stellung bewegen.

Wird jedoch beispielsweise mit einem Zugseil 152 auf den Betätigungskörper 132 in Richtung 90b, also entgegengesetzt zur Spannrichtung 90a, eingewirkt, so bewegt sich der Betätigungskörper 132, wie in Fig. 6 dargestellt, so weit in der Richtung 90b, dass die Sperrkörper 127 mit ihren Innenflächen 134 nicht mehr an den Betätigungsflächen 136 anliegen, sondern an den Freigabeflächen 138 und somit die Möglichkeit haben, sich in der Querrichtung 131 so weit vom Gehäuse 122 weg zu bewegen, dass sie nicht mehr in die Taschen 130 eingreifen. Dabei hat sich zunächst der Spannkörper 124 aufgrund der gegenüber der Stellfeder 150 stärkeren Spannfeder 126 noch nicht in Richtung 90b bewegt, sondern steht noch unter der Kraft der Spannfeder 126 und beaufschlagt den Verschiebekeil 92, um diesen in der die Kugel 60 spielfrei in Sperrstellung haltenden Stellung zu halten.

Erst nachdem der Betätigungskörper 132 so weit bewegt ist, dass die Bewegung durch die gegen den Anschlagstift 142 wirkende Anschlagfläche 148 begrenzt ist, erfolgt über den Betätigungskörper 132 eine Verschiebung des Spannkörpers 124 in der Richtung 90b entgegengesetzt zur Spannrichtung 90a und somit entgegengesetzt zur Kraftwirkung der Spannfeder 126, wie in Fig. 7 dargestellt, so dass sich auch die Sperrkörper 127 in Löserichtung 90b von den Taschen 130 weg bewegen und ein Verschieben des mit dem Spannkörper 124 verbundenen Keilkörpers 82 so weit möglich ist, dass die Verriegelungskugel 60 die Möglichkeit hat, über die Stellschräge 86 hinweg ihre Freigabestellung einzunehmen.

Sobald die Betätigung durch das Zugseil 152 nicht mehr erfolgt, bewegt sich zunächst der Spannkörper 124 wiederum in Spannrichtung 90a und gleichzeitig beaufschlagt der Betätigungskörper 132 wiederum die Sperrkörper 127 so, dass diese das Bestreben haben, dann, wenn sie in Richtung 90a wiederum deckungsgleich mit den Taschen 130 stehen, in diese eingreifen und eine weitere Bewegung des Spannkörpers 124 in Richtung 90b wiederum blockieren, wobei hierzu wiederum die Betätigungsflächen 136 auf die Sperrkörper 127 wirken.

Die Taschen 130 und die Sperrkörper 127 sind dabei so relativ zueinander angeordnet, dass bei in die Taschen 130 eingreifenden Sperrkörpern 127 der Spannkörper 124 sich maximal soweit entgegengesetzt zur Spannrichtung 90a bewegt, dass die Verriegelungskugel 60 stets in ihrer Sperrstellung verbleibt. Beispielsweise lassen die Taschen 130 und die in diese eingreifenden Sperrkörper 127 eine Bewegung des Keilkörpers 82 so weit zu, dass ein Auflagepunkt der Verriegelungskugel 60 sich auf der Spannschräge 92 bis zur Sicherungsfläche 88 bewegen kann, jedoch nicht weiter.

Stützelemente 50, 60 und die Anschlagelemente 56, 66 sowie die Betätigungseinrichtung 80 mit der Spannkrafterzeugungseinheit 120 bilden eine Fixiereinrichtung F für den Kugelhals 16 bei der ersten Bauart der Kupplungseinheit.

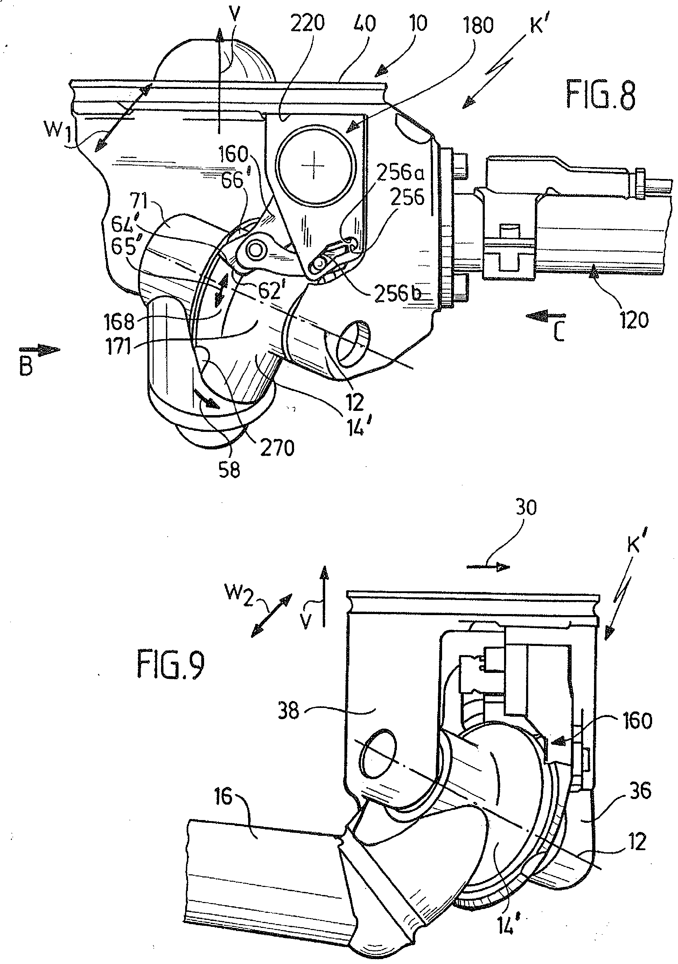

Bei einer zweiten Bauart einer Kupplungseinheit K' für eine erfindungsgemäße Anhängekupplung, ausschnittsweise dargestellt in den Fig. 8 und 9, sind diejenigen Teile, die mit denen des ersten Ausführungsbeispiels identisch sind, mit den identischen Bezugszeichen versehen.

Insbesondere ist das Lagerteil 10 im Wesentlichen von seinen Grundfunktionen her identisch ausgebildet, wobei insbesondere auch die Schwenkachse 12 in gleicher Richtung verläuft wie beim ersten Ausführungsbeispiel. Fig. 8 zeigt dabei den Winkel W1, gegenüber welchem die Schwenkachse 12 bezüglich der Vertikalen V geneigt ist, sofern die Lage der Schwenkachse 12 in eine senkrecht zur Fahrzeuglängsrichtung 30 verlaufende Querebene des Fahrzeugs projiziert ist: Fig. 9 zeigt den Winkel W2, um welchen die Schwenkachse 12 gegenüber der Vertikalen V geneigt ist, wenn die Schwenkachse 12 in eine von der Fahrzeuglängsrichtung 30 und der Vertikalen V aufgespannte Fahrzeuglängsebene projiziert ist.

Ferner sind die Lagerflansche 36 und 38 sowie das Schwenkteil 14 und der Kugelhals 16, genau wie beim ersten Ausführungsbeispiel beschrieben, einstückig miteinander verbunden und stellen eine als Ganzes um die Schwenkachse 12 schwenkbare Einheit dar.

Allerdings weicht das Schwenkteil 14' hinsichtlich seiner Form von der Form des Schwenkteils 14 des ersten Ausführungsbeispiels ab, wie nachfolgend noch im Einzelnen dargelegt ist.

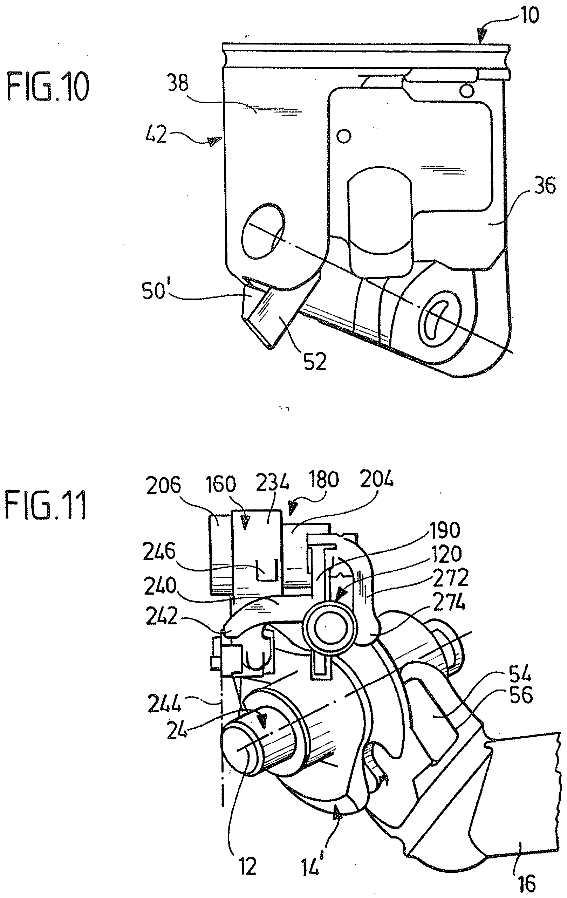

Bei der Darstellung des Lagerteils 10 in Fig. 10 unter Weglassung des Schwenkteils 14' mit dem Kugelhals 16 und des Lagerbolzens 24 ist die am Lagerteil 10, insbesondere der Rückwand 42 desselben, vorgesehene Stützfläche 52 erkennbar, die durch ein an die Rückwand 42 angeformtes Stützelement 50' gebildet wird.

Gegen diese Stützfläche 52 wirkt, wie in Fig. 11 dargestellt, in der Arbeitsstellung die erste Anschlagfläche 54, welche von dem Ansatz 56 des Kugelhalses 16 getragen ist, der unmittelbar an den vom Schwenkteil 14' ausgehenden Ansatz des Kugelhalses 16 angeformt ist.

Als zweite Anschlagfläche 64' ist, wie in Fig. 8 dargestellt, eine quer zu einer Umlaufbahn 65' um die Schwenkachse 12 verlaufende Endfläche 64' einer als Ganzes mit 66' bezeichneten Vertiefung vorgesehen, welche in einem um die Schwenkachse 12 umlaufenden Kamm 168 angeordnet ist, der über einen den Lagerbolzen 24 umschließenden Lagerkörper 171 des Schwenkteils 14' radial übersteht.

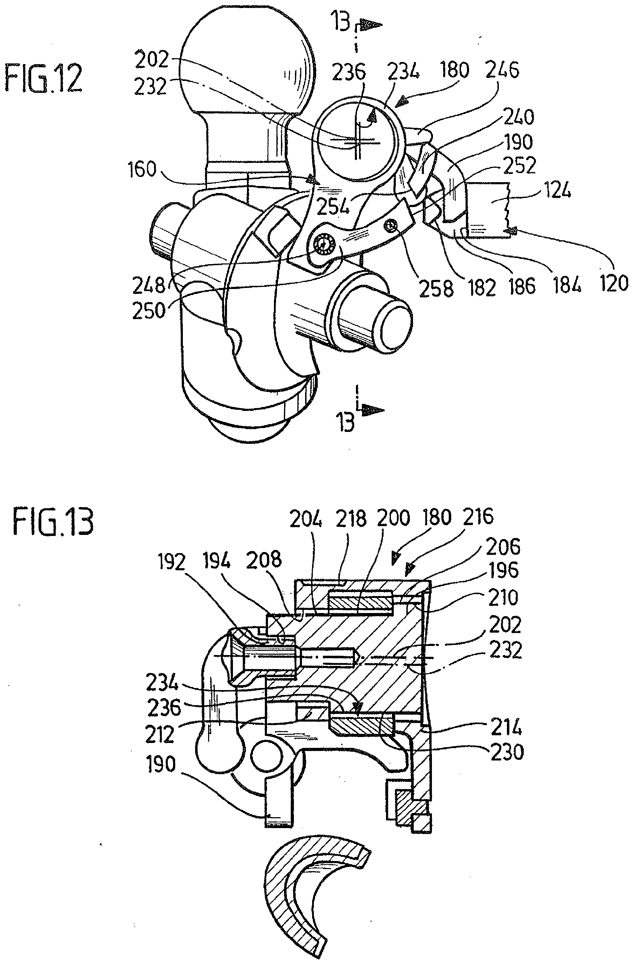

Die mit der zweiten Anschlagfläche 64 zusammenwirkende zweite Stützfläche 62' ist getragen von einem in Form eines Stützarms ausgebildeten zweiten Stützelement 160, welcher - wie nachfolgend im einzelnen erläutert - zwischen einer Sperrstellung, dargestellt in Fig. 8 und einer Freigabestellung, dargestellt in Fig. 12, bewegbar ist.

Zum Verschwenken des Stützarms 160 ist eine als Ganzes mit 180 bezeichnete Betätigungseinrichtung vorgesehen, welche mit der Spannkrafterzeugungseinheit 120 zusammenwirkt, um den Stützarm 160 in die Freigabestellung und die Sperrstellung zu verschwenken und mit diesem ein Verspannen des Schwenkteils 14' zu erreichen.

Die Spannkrafterzeugungseinheit 120 ist prinzipiell in gleicher Weise ausgebildet wie beim ersten Ausführungsbeispiel, mit dem einzigen Unterschied, dass an den Spannkörper 124 nicht wie beim ersten Ausführungsbeispiel der Keilkörper 82 angeformt ist, sondern eine mit zwei einander gegenüberliegenden Wirkflächen 182 und 184 versehene und zwischen diesen liegende Aussparung 186, welche mit diesen Wirkflächen 182 und 184 auf einen zwischen diese Wirkflächen 182 und 184 eingreifenden sichelförmigen Antriebshebel 190 der Betätigungseinrichtung 180 einwirken.

Der Antriebshebel 190 der Betätigungseinrichtung 180 ist mit einem beispielsweise eine mehrkantige Form aufweisenden Hebelansatz 192 versehen, welcher formschlüssig in eine Hebelaufnahme 194 einer Exzenterwelle 196 eingesetzt ist. (Fig. 3)

Die Exzenterwelle 196 umfasst ihrerseits ferner zwei beiderseits eines Exzenterabschnitts 200 und zu einer Drehachse 202 koaxial angeordnete Lagerflächen 204 und 206, welche entsprechend den Lagerflächen 204 und 206 geformte Aufnahmeflächen 208 und 210 um die Drehachse 202 drehbar in Lagerflanschen 212 und 214 eines als Ganzes mit 216 bezeichneten Lagerkörpers gelagert sind, wobei der Lagerkörper 216 eine die Lagerflansche 212 und 214 tragende Grundplatte 218 umfasst, die ihrerseits, wie beispielsweise in Fig. 8 dargestellt, an einer Unterseite 220 der Montageplatte 40 montierbar ist.

Vorzugsweise ist eine Montage der Grundplatte 218 derart vorgesehen, dass durch die Positionierung der Grundplatte 218 und auch die Positionierung der gesamten Betätigungseinrichtung 180 und damit eine Justierung der Betätigungseinrichtung 180 mitsamt dem Stützarm 160 relativ zum Lagerteil 10 durchführbar ist.

Der Exzenterabschnitt 200 umfasst ebenfalls eine Lagerfläche 230, welche zylindrisch zu einer gegenüber der Drehachse 202 exzentrisch versetzten Achse 232 ausgebildet ist.

Durch die Lagerfläche 230 ist der Stützarm 260 mit in einem Lagerauge 234 desselben angeordneten Lageraugenflächen 236 um die Achse 232 drehbar gelagert, wobei durch Verdrehen des Exzenterabschnitts 200 um die Drehachse 202 eine Verschiebung des Stützarms 160 in radialer Richtung zur Drehachse 202 möglich ist und die maximal mögliche Verschiebung des Stützarms 160 in radialer Richtung zur Drehachse 202 dem Abstand der Achse 232 von der Drehachse 202 entspricht.

Außerdem ist der Stützarm 160 aufgrund der zylindrischen Ausbildung der Lagerfläche 230 um die Achse 232 unabhängig von der Stellung des Exzenterabschnitts 200 verschwenkbar, wobei das Verschwenken des Stützarms 160 ebenfalls über den Antriebshebel 190 mit erfolgt, wie nachfolgend im einzelnen beschrieben.

Der Antriebshebel 190 ist hierzu, wie in Fig. 11 dargestellt, mit einem Mitnehmerarm 240 versehen, welcher sich quer zum Antriebshebel 190 in Richtung des Stützarms 160 erstreckt und dann noch über den Stützarm 160 hinaus so weit vom Antriebshebel 190 weg, dass ein vorderes Ende 242 des Mitnehmerarms bis in eine Ebene 244 reicht, die senkrecht zur Drehachse 202 auf einer dem Antriebshebel 190 abgewandten Seite des Stützarms 160 verläuft.

Ferner ist der Stützarm 160 im Bereich seines Lagerauges 234 mit einer Nase 246 versehen, welche in radialer Richtung zur Drehachse 202 übersteht und zwar so weit, dass der Mitnehmerarm 240 an dieser unter Mitnahme des Stützarms 160 zur Anlage kommen kann, wie in Fig. 12 dargestellt, und nachfolgend noch im einzelnen beschrieben.

An dem Stützarm 160 ist um eine im Abstand zur Achse 232 verlaufende Drehachse 248 drehbar ein Mitnahmehebel 250 angelenkt, welcher sich in der Ebene 244 erstreckt und eine Mitnahmefläche 252 aufweist, die in der Lage ist, mit einer Endfläche 254 am Ende 242 des Mitnehmerarms 240 zusammenzuwirken, wobei der Mitnahmehebel 250 zusätzlich noch durch eine an dem Lagerflansch 214 vorgesehene Kulissenbahn 256 steuerbar ist und zwar so, dass die Mitnahmefläche 252 in einer mit der Endfläche 254 in Wirkverbindung bringbaren Stellung steht oder einer außer Wirkverbindung stehenden Stellung. Hierzu ist der Mitnahmehebel 250 noch mit einem Mitnehmer 258, vorzugsweise in Form eines Mitnehmerstifts versehen, welcher in die Kulissenbahn 256 eingreift. Der Mitnehmer 258 ist dabei nahe der Mitnahmefläche 252 vorgesehen, um durch Verschwenken des Mitnahmehebels 250 um die Schwenkachse 248 die Position der Mitnahmefläche 252 in der bereits genannten Weise zu steuern.

Wie bereits in Fig. 8 und 9 dargestellt, liegt in der Sperrstellung des Stützarms 160 dieser mit seiner Stützfläche 162 an der Anschlagfläche 164 der Vertiefung 166 an. Außerdem steht der Stützarm 160 in der in Fig. 8 und 9 gezeichneten Stellung in seiner Spannstellung, so dass das Schwenkteil 14' ein derartiges Moment erfährt, dass die Stützfläche 52 und die erste Anschlagfläche 54 gegeneinander verspannt anliegen.

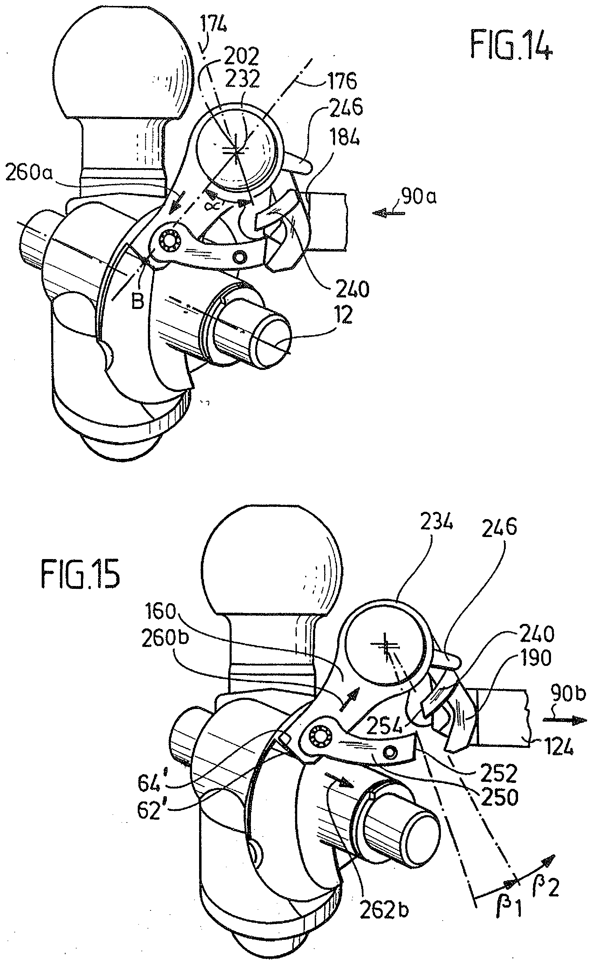

In dieser Stellung ist, wie in Fig. 14 dargestellt, der Exzenterabschnitt 200 so weit verdreht, dass die Achse 232 auf einer der Anschlagfläche 64' zugewandten Seite der Drehachse 202 der Exzenterwelle 196 liegt, so dass der gesamte Stützarm 160 in Richtung der Anschlagfläche 64' verschoben ist.

Dabei schließt, wie in Fig. 14 dargestellt, eine durch die Achse 232 und die Drehachse 202 hindurchverlaufende Ebene 174 einen Winkel α mit einer Ebene 176 ein, die einerseits durch die Achse 232 und andererseits durch einen Berührungspunkt B zwischen der Anschlagfläche 64' und der Stützfläche 62' verläuft.

Das heißt, dass die Verschiebung des Stützarms 160 in Richtung der Anschlagfläche 64' nicht um den maximal möglichen Weg, vorgegeben durch den Abstand zwischen der Drehachse 202 und der Achse 232, erfolgt ist, sondern nur um einen Teilbetrag dieses Weges, wie nachfolgend noch im einzelnen erläutert.

In dieser Stellung des Stützarms 160 wird die Exzenterwelle 196 durch den Antriebshebel 190 mit einem Drehmoment beaufschlagt, welches daher rührt, dass auf den Antriebshebel 190 der von der Spannfeder 126 der Spannkrafterzeugungseinheit 120 beaufschlagte Spannkörper 124 dadurch wirkt, dass die Wirkfläche 184 den Antriebshebel 190 beaufschlagt.

Der Stützarm 160 würde aber ohnehin in der Stützfläche 62' die Anschlagfläche 64' beaufschlagenden Stellung verbleiben, da der Exzenterabschnitt 200 so ausgebildet ist, dass aufgrund der Reibung zwischen der Lagerfläche 230 und der Lageraugenfläche 236 sowie des Abstandes zwischen der Drehachse 202 und der Achse 232 eine Selbsthemmung des Exzenters gegen eine Verdrehung durch Einwirkung auf die Stützfläche 62' besteht.

Wird nun an dem Zugseil 152 der Spannkrafterzeugungseinheit 120 gezogen und der Spannkörper 124 in Löserichtung 90b bewegt, so erfolgt, wie in Fig. 15 dargestellt, eine Drehung des Antriebshebels 190 so weit, bis der Mitnehmerarm 240 an der Nase 246 zur Anlage kommt. Während dieser Verdrehung des Antriebshebels 190 erfolgt lediglich eine Verdrehung des Exzenterabschnitts 200 gegenüber der Ebene 174 um einen Winkel β₁, wodurch eine Bewegung des Stützarms 160 in einer Richtung 260b von der Anschlagfläche 64' weg von der Spannstellung in die Lösestellung erfolgt, so dass die Verspannung zwischen der Stützfläche 52 und der Anlagefläche 54 aufgehoben wird. Wird der Spannkörper 124 noch weiter in Richtung 90b bewegt, so erfolgt ein weiteres Verschwenken des Exzenterabschnitts 200 um einen weiteren zusätzlichen Winkel β₂, so dass der Stützarm 160 noch weiter in Richtung 260b bewegt wird. Gleichzeitig erfolgt aber durch Anlage des Mitnehmerarms 240 an der Nase 246 ein gleichzeitiges Verschwenken des Stützarms 160 in einer Richtung 262b von der Sperrstellung in die Freigabestellung, wobei die Stützfläche 62' aus der Vertiefung 66' herausbewegt wird und sich somit auch von der Anschlagfläche 64' entfernt und somit eine Schwenkbewegung des Kugelhalses 16 um die Schwenkachse 12 freigibt. Bereits bei geringer Verschwenkung des Schwenkteils 14' mit dem Kugelhals 16 um die Schwenkachse 12 ist das Schwenkteil 14' mit dem Kamm 168 so weit gegenüber dem Stützarm 160 verdreht, dass die Stützfläche 62' nicht mehr in die Vertiefung 66' hineinbewegt werden kann. Ist dies der Fall, kann bereits die Zugbeaufschlagung des Spannkörpers 124 durch das Zugseil 152 entfallen und der Spannkörper 124, beaufschlagt durch die Spannfeder 126, wieder auf den Antriebshebel 190 wirken.

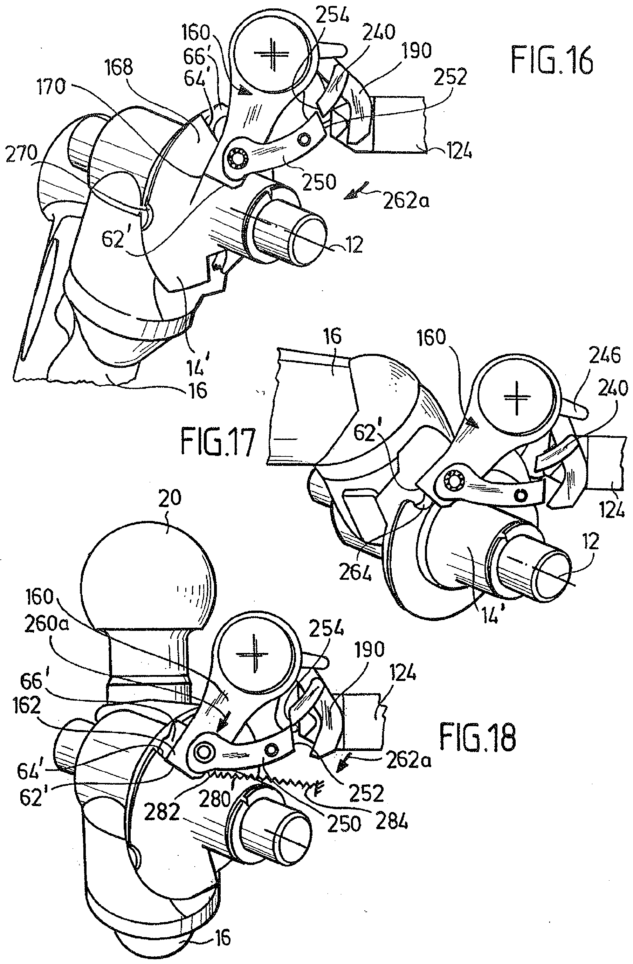

Der Antriebshebel 190 ist jedoch in seiner Schwenkbewegung in Richtung 262a dadurch blockiert, dass der Mitnehmerarm 240 mit der Endfläche 254 an der Mitnahmefläche 252 des Mitnahmehebels 250 anliegt (Fig. 16), welcher durch die Kulissenbahn 256 so weit verschwenkt ist, dass die Mitnahmefläche 252 durch die Endfläche 254 beaufschlagbar ist. Hierzu weist die Kulissenbahn 256, wie in Fig. 8 dargestellt, einen den Mitnahmehebel 250 in Richtung der Drehachse 202 verschwenkenden und somit in Wirkstellung bringenden, beispielsweise anhebenden Abschnitt 256a auf.

Ferner ist der Stützarm 160 gegen ein Verschwenken in Richtung 262a, das heißt in Richtung der Sperrstellung, blockiert, da der Stützarm 160 an einer Seitenfläche 170 des Kamms 168 anliegt und an dieser beim Drehen des Schwenkteils entlanggleitet. Dabei ist der Kugelhals 16 beispielsweise von der Arbeitsstellung in eine Ruhestellung verschwenkbar.

In der in Fig. 17 dargestellten Ruhestellung des Kugelhalses 16 ist das Schwenkteil 14' so weit um die Achse 12 verschwenkt, dass der Stützarm 160 mit seinem vorderen, die Stützfläche 62' tragenden Ende in eine Freisparung 264 einschwenken kann, in welcher allerdings die Stützfläche 62' nicht wirksam ist. Um das Schwenkteil 141 in der Ruhestellung des Kugelhalses 16 zu fixieren ist der Kamm 168 mit einer weiteren Aussparung 270 versehen, in welche in der Ruhestellung des Kugelhalses 16 ein Festleghebel 272 mit einem kugelförmig ausgebildeten vorderen Ende 274 in Eingriff kommt. Der Festleghebel 272 ist dabei starr mit dem Antriebshebel 190 verbunden und kann dann in die Aussparung 270 eingreifen, wenn der Stützarm 160 in die Freisparung 264 eingeschwenkt ist.

Das Einschwenken des die Stützfläche 62' tragenden Endes des Stützarms 160 in die Freisparung 264 dient lediglich dazu, eine Verschwenkung des Antriebshebels 190 in Richtung 262a um einen derartigen Winkel zuzulassen, dass der Festleghebel 272 mit dem kugelförmigen Ende 274 in die Aussparung 270 eingreifen kann.

In der Ruhestellung des Kugelhalses 16 erfolgt somit lediglich eine Festlegung desselben gegen ein Verschwenken um die Schwenkachse 12 aufgrund des Eingreifens des Festleghebels 272 mit dem Ende 274 in die Aussparung 270, ohne dass ein zusätzliches Verspannen gegen zusätzliche Stütz- und Anlageflächen vorgesehen ist.

Das Freigeben der Schwenkbewegung des Schwenkteils 14' in der Ruhestellung des Kugelhalses 16 erfolgt wiederum durch Ziehen am Zugseil 152 und somit Bewegen des Spannkörpers 124 in Richtung 92b, so dass wiederum durch Zusammenwirken des Mitnehmerarms 240 mit der Nase 246 ein Verschwenken des Stützarms 160 und auch des Festleghebels 272 in die Freigabestellung erfolgt, und ein Weiterverschwenken des Schwenkteils 14 aus der Ruhestellung heraus wiederum zur Folge hat, dass der Stützarm 160 wiederum an der Seitenfläche 170 des Kamms 168 anliegt und somit ein gebremstes Verschwenken des Schwenkteils 14' um die Schwenkachse 12 in Richtung der Arbeitsstellung zulässt, so dass die gleiche, in Fig. 16 bereits gezeichnete Stellung des Schwenkarms 160 erreichbar ist, wobei stets der Spannkörper 124 beaufschlagt durch die Kraft der Spannfeder 126 auf den Antriebshebel 190 wirkt und über den Mitnehmerarm 240, die Endfläche 254, die Mitnahmefläche 252 und den Mitnahmehebel 250 die Spannkraft der Spannfeder 126 in eine in Richtung 262a auf das die Stützfläche 62' tragende Ende des Stützarms 160 wirkende Kraft umsetzt, mit welcher diese gegen die Seitenfläche 170 wirkt.

Sobald der Kugelhals 16 die Arbeitsstellung erreicht hat, wie in Fig. 18 dargestellt, schwenkt der Stützarm 160 mit dem die Stützfläche 62' tragenden Ende in die Vertiefung 66' ein und geht somit von der Freigabestellung in die Sperrstellung über, so dass die Stützfläche 62' wiederum in teilweise Überdeckung mit der Anlagefläche 64' kommt. Sobald der Stützarm 160 wiederum voll in die Vertiefung 66 eingeschwenkt ist und die Stützfläche 62' der Anlagefläche 64' zugewandt ist, wird durch die Kulissenbahn 256 der Mitnahmehebel 250 durch einen außer Wirkstellung bringenden, beispielsweise absenkenden Abschnitt 256b der Kulissenbahn 256 so weit verschwenkt, das die Endfläche 254 von der Mitnahmefläche 252 des Mitnahmehebels 250 abgleitet und nunmehr der Antriebshebel 190 in Richtung 262a weiter verschwenkbar ist, ohne den Stützarm 160, der bereits in der Vertiefung 66' steht, weiter zu verschwenken. Allerdings erfolgt dabei ein Verdrehen des Exzenterabschnitts 200 dergestalt, dass ein Verschieben des Stützarms 160 in Richtung 260a von der Lösestellung in die Spannstellung erfolgt, so dass die Stützfläche 62' die Anschlagfläche 64' mit Druck beaufschlagt und dabei zusätzlich ein Anlegen der Anschlagfläche 54 an der Stützfläche 52 mit Vorspannung und auch spielfrei erfolgt.

Zur Unterstützung des Erreichens der Sperrstellung ist, wie in Fig. 18 dargestellt, das die Stützflächen 62' tragende Ende 162 des Stützarms 160 mit einer Druckfeder 280 beaufschlagt, welche mit einem Ende 282 auf das Ende 162 des Stützarms 160 wirkt und sich mit einem anderen Ende 284 am Lagerteil 10, vorzugsweise am Lagerflansch 36, abstützt. Mit dieser Druckfeder 280 wird selbst bei nicht mehr auf die Mitnahmefläche 252 wirkender Endfläche 254 das Verschwenken des Stützarms 160 in die Sperrstellung vollendet und die Sperrstellung aufrecht erhalten, bis ein Übergang von der Lösestellung in die Spannstellung vollzogen ist.

Ferner wird auch beim Betätigen der Spannkrafterzeugungseinheit 120 die Sperrstellung durch die Druckfeder 280 so lange aufrecht erhalten, bis eine Mitnahme des Stützarms 160 durch das Zusammenwirken der Nase 246 und des Mitnehmerarms 240 erfolgt.

Die Stützelemente 50', 160, die Anschlagelemente 56, 66' sowie die Betätigungseinrichtung 180 mit der Spannkrafterzeugungseinheit 120 bilden die Fixiereinrichtung F der zweiten Bauart der Kupplungseinheit.

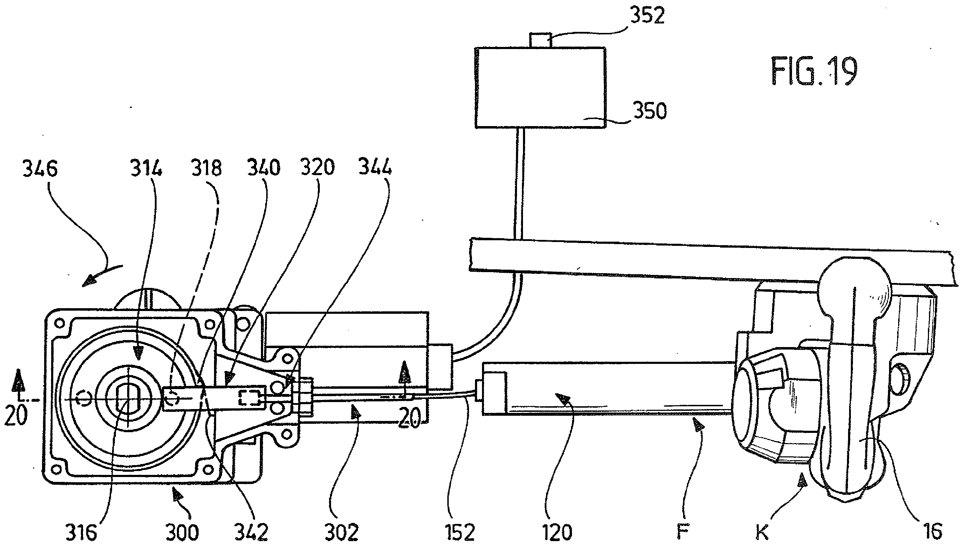

Ein Ausführungsbeispiel einer erfindungsgemäßen Anhängekupplung umfasst, wie in Fig. 19 dargestellt, zur Betätigung der Fixiereinrichtung F der Kupplungseinheit K gemäß einer der vorstehend beschriebenen Bauarten, insbesondere zur Betätigung der Spannkrafterzeugungseinheit 120 mittels deren Zugseil 152, einen als Ganzes mit 300 bezeichneten Löseantrieb, welcher in der Lage ist, auf das Zugseil 152 einzuwirken.

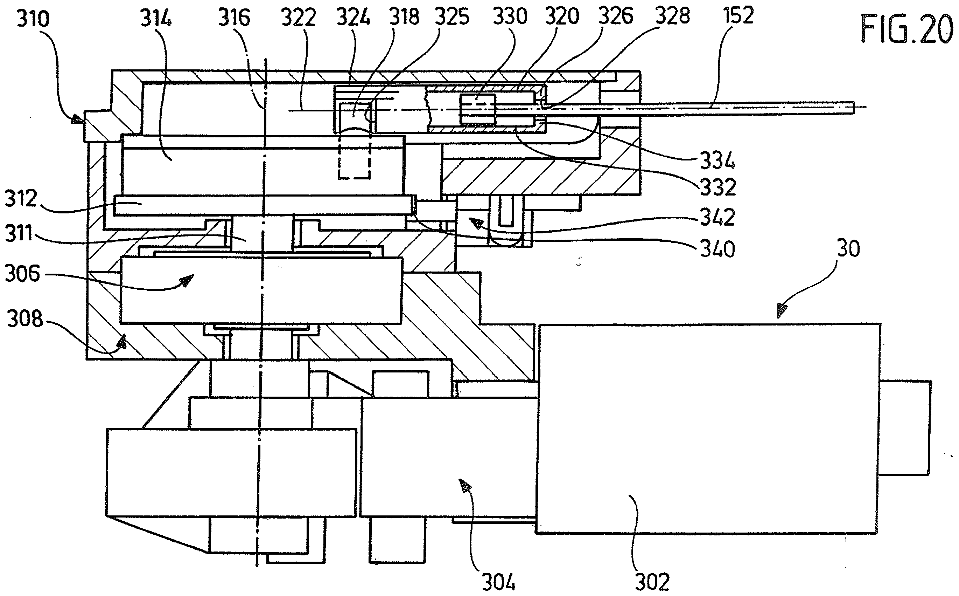

Der Löseantrieb 300 ist durch einen Elektromotor 302 antreibbar, welcher, wie in Fig. 20 dargestellt, über ein Schneckengetriebe 304 ein zusätzliches, als Untersetzungsgetriebe wirkendes Planetengetriebe 306 antreibt, das seinerseits in einem fest mit dem Elektromotor 302 verbundenen Lagergehäuse 308 angeordnet ist. Über das Planetengetriebe 306 als Untersetzungsgetriebe erfolgt ein Antrieb eines Exzentergetriebes 310 über eine Antriebswelle 311, auf welcher eine Steuerscheibe 312 und auf einer dem Planetengetriebe 306 gegenüberliegenden Seite der Steuerscheibe 312 ein Exzenterrad 314 drehfest angeordnet sind. Das Exzenterrad 314 trägt einen gegenüber einer Drehachse 316 der Antriebswelle 310 exzentrisch angeordneten Exzenterzapfen 318, welcher über eine der Steuerscheibe 312 abgewandten Seite des Exzenterrades 314 in Richtung der Drehachse 316 übersteht. Der Exzenterzapfen 318 greift dabei in eine als Ganzes mit 320 bezeichnete Zughülse ein, welche auf dem Exzenterzapfen 318 drehbar angeordnet ist.

Die Zughülse 320 erstreckt sich dabei mit einer Längsrichtung 322 quer, insbesondere senkrecht zur Drehachse 16, wobei der Exzenterzapfen 318 im Bereich eines ersten Endes 324 in eine Aufnahme 325 der Zughülse 320 eingreift. Im Bereich eines zweiten, dem ersten Ende 324 gegenüberliegenden Endes 326 der Zughülse 320 ist ein Durchbruch 328 vorgesehen, durch welchen das Zugseil 152 aus der Spannkrafterzeugungseinheit 120 in die Zughülse 320 hineinläuft. Das Zugseil ist fest mit einem Zugkörper 330 verbunden, welcher in der Zughülse 320 in Längsrichtung 322 der Zughülse 320 bewegbar angeordnet ist.

Der Zugkörper 330 ist vorzugsweise zwischen Wänden 332 der Zughülse 320 geführt und dabei zwischen einem an dem Ende 326 angeordneten und den Durchbruch 328 aufweisenden Boden 334 und der Aufnahme 325 für den Exzenterzapfen 318 bewegbar.

Wie in Fig. 19 dargestellt, trägt die ebenfalls drehfest auf der Antriebswelle 311 sitzende Steuerscheibe 312 einen Steuernocken 340, mit welchem ein am Gehäuse 308 angeordneter Schalter 342 betätigbar ist.

Der Steuernocken 340 ist dabei so angeordnet, dass er in der in Fig. 19 dargestellten Ausgangsstellung den Schalter 342 betätigt.

Ferner erstreckt sich in einer in Fig. 19 dargestellten Ausgangsstellung die Zughülse 320 von dem Exzenterzapfen 318 weg in Richtung einer Einlaufführung 344 des Zugseils 152, die an dem Gehäuse 308 angeordnet ist und durch welche das Zugseil 152 hindurch bis zur Zughülse 320 verläuft.

In der in Fig. 19 dargestellten Ausgangsstellung wirkt jedoch die Zughülse 320 nicht auf den Zugkörper 330, so dass dieser in einem Abstand von dem Boden 334 in der Zughülse 320 angeordnet ist.

Zum Betreiben des Elektromotors 302 ist eine als Ganzes mit 350 bezeichnete Steuerung vorgesehen, welche über einen Schalter 352, beispielsweise einen Druckschalter, einschaltbar ist. Vorzugsweise ist der Schalter 352 so am Kraftfahrzeug angeordnet, dass eine diesen betätigende Person Sichtkontakt mit der Kupplungseinheit K hat, um die Bewegungen des Kugelhalses 16 verfolgen zu können.

Ein Betätigen des Schalters 352 löst ein Starten des Elektromotors 302 aus, der in seiner Ausgangsstellung steht.

Wird nun durch Starten des Elektromotors 302 das Exzenterrad 314 in der Drehrichtung 346 gedreht, so bewegt sich der Exzenterzapfen 318 von seiner in Fig. 19 und 20 dargestellten, einer ersten Totpunktstellung entsprechenden Ausgangsstellung in Richtung einer zweiten, in Fig. 19 gepunktet angedeuteten Totpunktstellung, wobei die mit dem Exzenterzapfen 318 mitgenommene Zughülse 320 mitbewegt wird. Dadurch wird zunächst der Zugkörper 330 so weit bewegt, bis er an dem Boden 334 der Zughülse 320 anliegt und ab diesem Moment wirkt die Zughülse 320 über den Zugkörper 330 auf das Zugseil 152 ein, wobei sich die Zughülse 320 und das Zugseil 152 zwischen der jeweiligen Stellung des Exzenterzapfens 318 und der Einlaufführung 344 erstrecken. Dadurch wird die Spannkrafterzeugungseinheit 120 betätigt, wobei die zweite Totpunktstellung des Exzenterzapfens 318 so gewählt ist, dass in dieser bereits die Spannkrafterzeugungseinheit 120 voll im Sinne eines Lösens der Fixierung des Kugelhalses 16 betätigt ist, so dass über die jeweilige Betätigungseinrichtung 80 oder 180 ein Lösen der Fixierung des Schwenkteils 14 in der Arbeitsstellung oder der Ruhestellung erfolgt und der Kugelhals 16 in die Ruhestellung oder die Arbeitsstellung verschwenkbar ist.

Während dieser Zeit läuft das Exzenterrad 314 in Drehrichtung 346 weiter, so lange, bis der Steuernocken 340 wieder in der in Fig. 19 dargestellten Ausgangsstellung angekommen ist und den Schalter 342 betätigt. Durch Betätigen des Schalters 342 erfolgt eine Beendigung der Drehbewegung des Exzenterrads 314 durch die Steuerung 352, so dass dieses wieder in seiner ersten Totpunktstellung, dargestellt in Fig. 19 und 20, stehen bleibt und die Zughülse 320 ebenfalls wiederum nicht mehr auf das Zugseil 152 einwirkt und somit die Fixiereinrichtung F in Fixierbereitschaft steht, um bei Erreichen der Arbeitsstellung oder der Ruhestellung den Kugelhals 16 zu fixieren.

Nachdem der Kugelhals 16 mit dem Schwenkteil 14 aus der Arbeitsstellung herausbewegt wurde, in diesem Fall durch die Einwirkung der Schwerkraft auf den Kugelhals 16, kann dieser manuell so weit verschwenkt werden, bis er in seiner im Zusammenhang mit der Erläuterung der Kupplungseinheit beschriebenen Ruhestellung steht, und in dieser erfolgt wiederum ein Fixieren durch die in Fixierbereitschaft stehende Fixiereinrichtung F, insbesondere durch die auf die jeweilige Betätigungseinrichtung einwirkende Spannkrafterzeugungseinheit 120.

Soll in der Ruhestellung ein Lösen erfolgen, so erfolgt wiederum über den Löseantrieb 300 eine Zugwirkung auf das Zugseil 152 in der beschriebenen Art und Weise, wobei sich wiederum das Exzenterrad 314 in der Drehrichtung 346 um 360° dreht und dabei die zweite Totpunktstellung durchläuft, wodurch die Spannkrafterzeugungseinheit 120 derart betätigt wird, dass ein Entriegeln des Schwenkteils 14 in der Ruhestellung erfolgt.

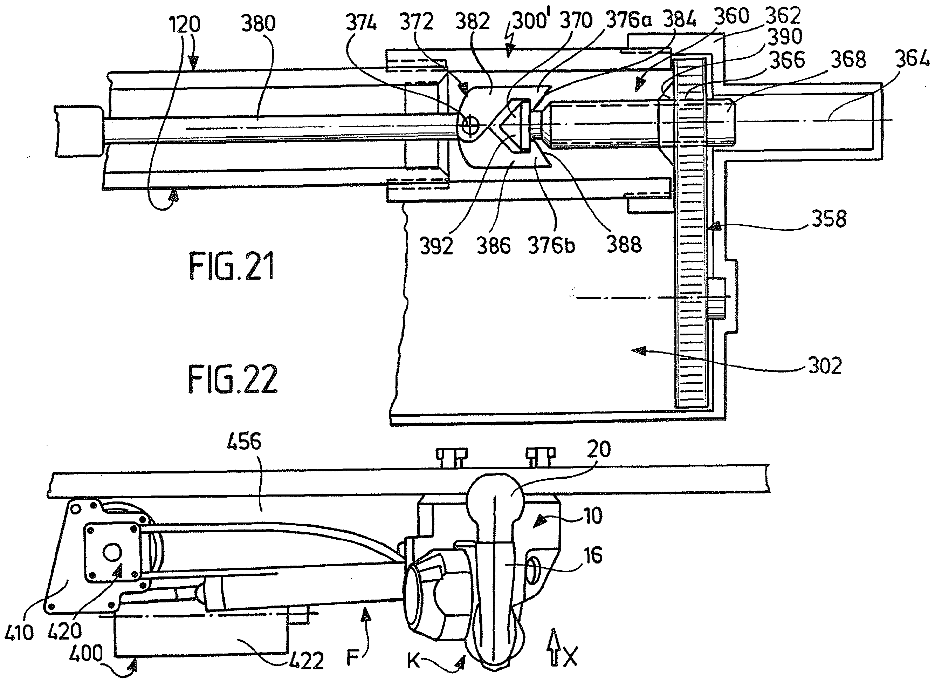

Bei einer alternativen Ausführungsform des Löseantriebs 300', dargestellt in Fig. 21, treibt der Elektromotor 302 über ein Untersetzungsgetriebe 358 einen als Ganzes mit 360 bezeichneten Spindelantrieb, welcher ein in einem Gehäuse 362 drehbar um eine Achse 364 gelagertes Antriebsrad 366 umfasst, das gleichzeitig eine Spindelmutter für eine in dem Gehäuse 362 verschiebbar gelagerte Spindel 368 darstellt, welche in Richtung der Drehachse 364 verschieblich ist, während das Antriebsrad 366 in Richtung der Drehachse 364 unverschieblich in dem Gehäuse 362 gelagert ist.

Vorzugsweise stützt sich das Gehäuse 362 an dem Gehäuse 122 der Spannkrafterzeugungseinheit 120 ab.

Die Spindel 368 ist an einem Ende mit einem Kopf 370 versehen, welcher mit einer Klammereinheit 372 in Eingriff bringbar ist, die zwei um eine quer zur Drehachse 364 verlaufende Schwenkachse 374 verschwenkbare Klammern 376a und 376b umfasst, und an einer Zugstange 380 angeordnet ist, die das Zugseil 152 der Spannkrafterzeugungseinheit 120 ersetzt und in dem Gehäuse 122 der Spannkrafterzeugungseinheit 120 in Richtung der Drehachse 364 verschieblich geführt gelagert ist, und zwar so, dass die Zugstange 380 koaxial zur Drehachse 364 verläuft.

Die beiden Klammern 376a, b der Klammereinheit 372 sind ferner noch durch einen Federring 382 in Richtung einer geschlossenen Stellung beaufschlagbar und so ausgebildet, dass sie in der Lage sind, mit Klammernasen 384 eine sich quer zur Drehachse 364 erstreckende Greiffläche 386 des Kopfes 370 zu hintergreifen.

Ferner sind die Klammern 376a, b noch mit dem Antriebsrad 366 verbundenen Auflaufschrägen 388 versehen, welche dann, wenn sie an einem der Klammereinheit 372 zugewandt angeordneten Öffnungskonus 390 des Antriebsrads 366 zur Anlage kommen, die Klammern 376a, b so weit auseinanderbewegen, dass diese die Greiffläche 386 nicht mehr hintergreifen und somit die Klammereinheit 372 frei in Richtung der Spannkrafterzeugungseinheit 120 bewegbar ist und dort wieder in die Ausgangsstellung übergeht.

Wird die Spindel 368 durch Drehen des Antriebsrads 366 wieder in Richtung der Ausgangsstellung der Klammereinheit 372 bewegt, so kann der Kopf 370 aufgrund seines Auflaufkonus 392, welcher gegen die Auflaufschrägen 388 wirkt, wieder die Klammern 376a und 376b öffnen und in diese eintauchen, so dass die Nasen 384 wieder die Fläche 386 hintergreifen und somit ein erneutes Bewegen der Klammereinheit 372 in Richtung einer Lösestellung ermöglichen.

Zum Betätigen der Spannkrafterzeugungseinheit 120 im Sinne eines Lösens der Fixierung des Kugelhalses 16 wird der Kopf 370 mit der Klammereinheit 372 in Eingriff gebracht und die Klammereinheit 372 in Richtung des Antriebsrades 366 bewegt, so dass im Laufe dieser Bewegung ein Lösen der Fixierung erfolgt.

Anschließend erfolgt ein Öffnen der Klammereinheit 372, so dass die Fixiereinrichtung F wieder in Fixierbereitschaft übergehen kann.

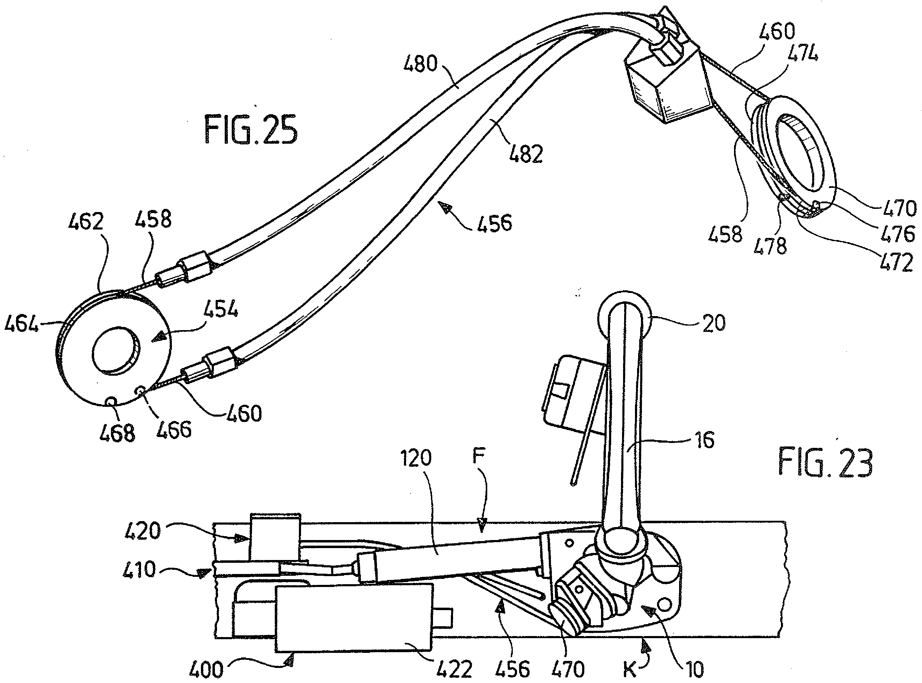

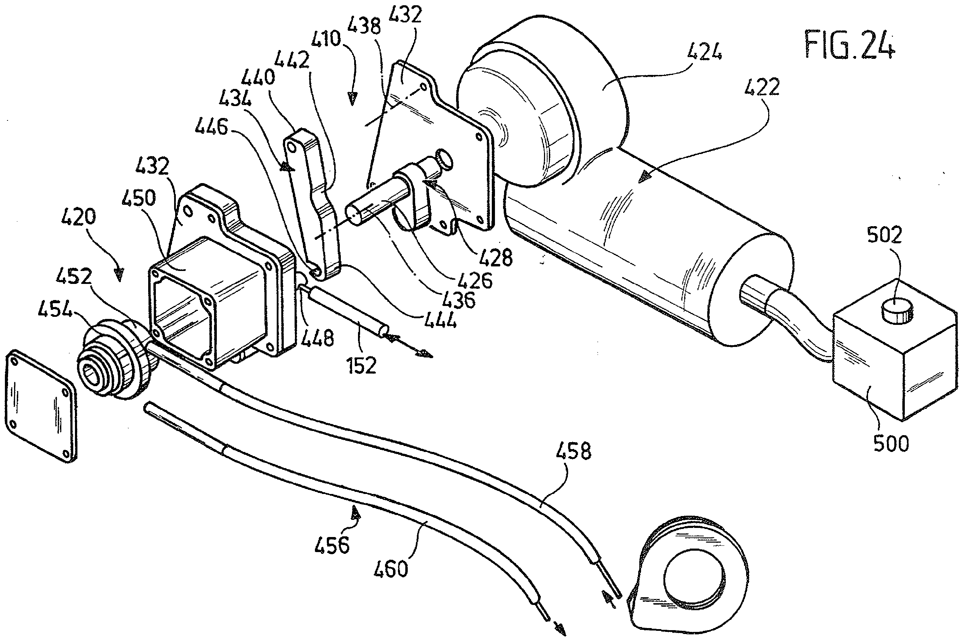

Bei einem zweiten Ausführungsbeispiel einer erfindungsgemäßen Anhängekupplung, dargestellt in Fig. 22 und 23, ist der Kupplungseinheit K mit der Fixiereinrichtung F eine Antriebseinheit 400 zugeordnet, welche, wie in Fig. 24 in der Explosionsdarstellung dargestellt, sowohl einen Löseantrieb 410 als auch einen Schwenkantrieb 420 umfasst.

Sowohl der Löseantrieb 410 als auch der Schwenkantrieb 420 sind durch einen gemeinsamen Antriebsmotor 422 antreibbar, welcher über ein Untersetzungsgetriebe 424 eine als Ganzes mit 426 bezeichnete Antriebswelle treibt. Auf dieser Antriebswelle 426 ist ein mit 428 bezeichneter Antriebsnocken eines Exzentergetriebes 430 drehfest angeordnet. Ferner ist in einem dem Löseantrieb 410 zugeordneten Gehäuse 432 ein Kipphebel 434 um eine zur Drehachse 436 der Antriebswelle 426 parallel verlaufende Achse 438 im Bereich eines ersten Endes 440 drehbar gelagert und weist eine dem Exzenternocken 428 zugewandte Gegenläuferfläche 442 auf.

An dem Kipphebel 434 ist ferner an einem dem Ende 440 gegenüberliegenden Ende 444 eine Aufnahme 446 für einen Zugkörper 448 des Zugseils 152 vorgesehen, so dass der Kipphebel 434 in der Lage ist, einen Zug auf den Seilzug 152 auszuüben, um die Spannkrafterzeugungseinheit 120 im Sinne eines Lösens der Fixiereinrichtung F zu betätigen.

Die Antriebswelle 426 erstreckt sich ferner über das Gehäuse 432 des Löseantriebs 410 hinaus und durchsetzt ein Gehäuse 450 des Schwenkantriebs 420.

Dieser Schwenkantrieb 420 umfasst eine antriebsseitig drehfest auf der Antriebswelle 426 sitzende Rutschkupplung 452, welche abtriebsseitig einen Seilzugring 454 antreibt, welcher mit einem doppelten Seilzug 456, umfassend einen ersten Strang 458 und einen zweiten Strang 460, zusammenwirkt.

Die Wirkungsweise des doppelten Seilzugs 456 ist nochmals im Einzelnen in Fig. 25 dargestellt. Der Seilzugring 454 umfasst eine erste Nut 462 zur Aufnahme des ersten Strangs 458 und eine zweite Nut 464 zur Aufnahme des zweiten Strangs 460 in einer zur Umschlingungsrichtung des ersten Strangs 458 entgegengesetzten Umschlingungsrichtung, wobei die Stränge 458 und 460 durch endseitig derselben angeordnete Haltekörper 466 bzw. 468 an dem Seilzugring 454 fixiert sind. Dabei ist die Umschlingung der beiden Stränge 458 und 460 so gewählt, dass jeder Strang von einer ersten Stellung, in welcher dieser vom jeweiligen Haltekörper 466 bzw. 468 aus tangential zum Seilzugring 454 verläuft, durch Drehen des Seilzugrings 454 in eine Umschlingung desselben von mehr als 180° bringbar ist, so dass die gegenläufig wirkenden Stränge 458, 460 in der Lage sind, eine Drehbewegung des Seilzugrings 454 von mehr als 180° zu übertragen.

Die Stränge 458 und 460 wirken dabei, wie in Fig. 23 dargestellt, auf einen an der Kupplungseinheit K angeordneten, beispielsweise drehfest mit dem Lagerbolzen 24 verbundenes Antriebsrad 470, welches über den Lagerbolzen 24 einen Antrieb des drehfest mit diesem verbundenen Schwenkteils 14 erlaubt. Alternativ dazu ist das Antriebsrad 470 unmittelbar in das Schwenkteil 14 eingeformt oder mit dem Schwenkteil 14 verbunden im Lagerkörper 10 angeordnet.

Das Antriebsrad 470 weist eine Nut 472 für den ersten Strang sowie eine Nut 474 für den zweiten Strang auf, in welcher diese mit gegenläufigen Umschlingungsrichtungen eingreifen, wobei die Stränge 458 und 460 ihrerseits wieder mit Halteteilen 476 und 478 an dem Antriebsrad 470 festgelegt sind. Die Anordnung der Halteteile 476 und 478 erfolgt so, dass in einer ersten Stellung der eine Strang 458 tangential zum Antriebsrad 470 von dem zugeordneten Halteteil 476 weg verläuft, während der andere Strang 460 das Antriebsrad 470 mit einem Winkel von mehr als 180° umschlingend bis zum Halteteil 478 verläuft, während in einer zweiten Stellung der Strang 460 tangential zum Antriebsrad 470 von dem entsprechenden Halteteil 478 weg verläuft, während der andere Strang 458 das Antriebsrad mit einem Winkel von mehr als 180° umschlingend bis zum Halteteil 476 verläuft.

Zwischen dem Gehäuse 450 des Schwenkantriebs 420 und der Kupplungseinheit K sind die Stränge 458 und 460 noch vorzugsweise in Führungshüllen 480 und 482 geführt, die einerseits an der Kupplungseinheit K und andererseits an dem Gehäuse 450 fest verankert sind, so dass die jeweilige Führungshülle 480, 482 mit dem entsprechenden Strang 458, 460 einen Bowdenzug bildet.

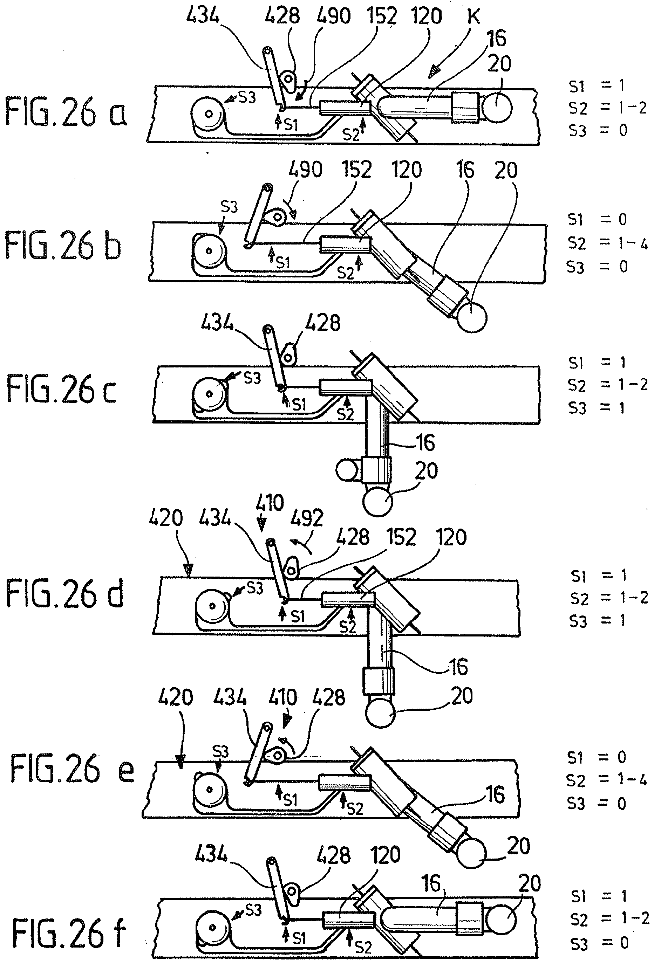

Die Funktion des zweiten Ausführungsbeispiels, umfassend sowohl den Löseantrieb 410 als auch den Schwenkantrieb 420, ist beispielhaft in Fig. 26a bis f dargestellt.

Zur Steuerung der einzelnen Funktionen sind zusätzlich noch Endschalter S1, S2 und S3 vorgesehen, wobei der Endschalter S1, wie in Fig. 26a dargestellt, die Ausgangsstellung des Kipphebels 434 detektiert. Der Endschalter S2 detektiert, ob die Spannkrafterzeugungseinheit 120 in einer derartigen Stellung steht, dass die Betätigungseinrichtung 80, 180 voll betätigt ist und somit das Schwenkteil 14 entweder in der Arbeitsstellung oder in der Ruhestellung verriegelt ist. Der Schalter S3 detektiert, ob der Seilzugring 454 in einer der Arbeitsstellung des Kugelhalses 16 entsprechenden Drehstellung steht.

Wird beispielsweise, wie in Fig. 26a dargestellt, von einer Ruhestellung des Kugelhalses 16 der Kupplungseinheit K ausgegangen, so steht der Exzenternocken 428 in einer Ausgangsstellung, so dass auch der Kipphebel 434 in einer Stellung steht, in welcher er nicht auf den Seilzug 152 der Spannkrafterzeugungseinheit 120 wirkt. Wird nun der Antriebsmotor 422 eingeschaltet, so erfolgt ein Schwenken des Exzenternockens 480 in einer ersten Richtung 490, dergestalt, dass der Kipphebel 434 von seiner Ausgangsstellung entsprechend einer ersten Totpunktstellung des Exzenternockens 428 in eine Zugstellung entsprechend einer zweiten Totpunktstellung des Exzenternockens 428, dargestellt in Fig. 26b, übergeht, in welcher die Spannkrafterzeugungseinheit 120 über das Zugseil in ihrer betätigten Stellung ist, d. h. keine Kraft mehr auf die jeweilige Betätigungseinrichtung 80 oder 180 ausübt, so dass die Fixierung des Schwenkteils 14 gelöst ist.

Bis zum Lösen der Fixierung der Schwenkteils 14 dreht die drehfest mit der Rutschkupplung 452 verbundene Antriebswelle 426 den Seilzugring 454 nicht, da die Drehbewegung des Schwenkteils 14 nach wie vor blockiert ist, so dass die Rutschkupplung 452 durchrutscht. Nach Lösen der Fixierung des Schwenkteils 14 greift die Rutschkupplung 452, und das Weiterdrehen der Antriebswelle 426 führt auch zu einem Verschwenken des Kugelhalses 16, angetrieben über den Seilzugring 454, den doppelten Seilzug 456 und das Antriebsrad 470. Die Schwenkbewegung des Kugelhalses 16 wird dabei so lange durchgeführt, bis dieser die in Fig. 26c dargestellte Arbeitsstellung erreicht hat. Während dieser Zeit hat der Exzenternocken 428 bereits die zweite Totpunktstellung passiert, und der Kipphebel 434 steht bereits wieder in der Ausgangsstellung, so dass bei Erreichen der Arbeitsstellung, angetrieben über den Schwenkantrieb 420, eine selbsttätige Fixierung des Kugelhalses 16 aufgrund der durch die Spannkrafterzeugungseinheit 120 beaufschlagten Betätigungseinrichtungen 80, 180 erfolgt.

Beim Zurückschwenken von der Arbeitsstellung in die Ruhestellung wird, wie in den Figuren 26d bis f dargestellt, die Drehrichtung der Antriebswelle 426 invertiert, so dass diese nunmehr in die zur Drehrichtung 490 entgegengesetzte Drehrichtung 492 dreht und der Exzenternocken 428 gegen den Kipphebel 434 wirkt und über den Seilzug 152 ein Betätigen der Spannkrafterzeugungseinheit 120 dergestalt erfolgt, dass die Fixierung des Schwenkteils 14 gelöst wird. Während dieser hierzu erforderlichen Drehbewegung der Antriebswelle 426 rutscht die Rutschkupplung 452 durch, da die Drehbewegung des Schwenkteils 14 noch durch die Fixiereinrichtung F blockiert ist. Erst nachdem ein Lösen der Fixierung erfolgt ist, kann der Schwenkantrieb 420 den Kugelhals 16 in Richtung der Ruhestellung verschwenken, wobei gleichzeitig der Exzenternocken 428 die Totpunktstellung passiert und der Kipphebel 434 bereits wieder in die Ausgangsstellung zurückkehrt, so dass die Betätigungseinrichtung 80 oder 180, beaufschlagt durch die Spannkrafterzeugungseinheit 120, eine Fixierung des Kugelhalses 16 in der Ruhestellung herbeiführt.

Die Schalter S1, S2 und S3 dienen nun dazu, um die einzelnen Zustände für eine Steuerung 500 für den elektrischen Antriebsmotor 422 zu erfassen.

Wie in Fig. 26a und c sowie 26d und 26f erkennbar, ist der Ruhestellung eine andere Stellung des Schalters S3 zugeordnet als der Arbeitsstellung, so dass die Steuerung 500 in der Lage ist, diese beiden Stellungen zu unterscheiden und somit auch die Drehrichtung, nämlich die Drehrichtung 490 oder 492 festzulegen, in welcher der Antriebsmotor 422 drehen soll, um die jeweils andere Stellung zu erreichen.

Darüber hinaus ist für die Steuerung 500 aus der Stellung des Schalters S1 erkennbar, ob der Exzenternocken 428 in einer Stellung steht, in welcher die Spannkrafterzeugungseinheit 120 betätigt ist oder nicht.

Schließlich zeigt der Schalter S2 jeweils an, ob die Spannkrafterzeugungseinheit 120 die jeweilige Betätigungseinrichtung 80, 180 voll mit der Spannkraft betätigt, d. h., ob die Betätigungseinrichtungen 80, 180 in einer Stellung stehen, in welcher das Schwenkteil 14 und der Kugelhals 16 drehfest fixiert sind oder nicht.

## Patentansprüche

1. Anhängekupplung für Kraftfahrzeuge umfassend eine Kupplungseinheit mit einem fahrzeugfest angeordneten Lagerteil (10) und einem am Lagerteil (10) gelagerten Schwenkteil (14) mit einem Kugelhals (16) und mit einer Kupplungskugel (20), welcher gegenüber dem Lagerteil (10) um eine Achse (12) zwischen einer Ruhestellung und einer Arbeitsstellung verschwenkbar ist, und mit einer mechanischen Fixiereinrichtung (F), mit welcher der Kugelhals (16) in der Arbeitsstellung gegenüber dem Lagerteil fixierbar ist, und welche durch einen elastischen Kraftspeicher (126) in Richtung ihrer den Kugelhals (16) fixierenden Stellung beaufschlagt ist, wobei zum Bewegen des Kugelhalses (16) aus der Arbeitsstellung heraus die Fixiereinrichtung (F) mittels eines elektrisch betreibbaren Löseantriebs (300, 410) betätigbar ist und wobei der Löseantrieb (300, 410) im Sinne einer Aufhebung der Kraftwirkung des elastischen Kraftspeichers (126) der Fixiereinrichtung (F) auf diese einwirkt
**dadurch gekennzeichnet, dass** beim Betätigen der Fixiereinrichtung (F) der Kugelhals (16) frei aus der Arbeitsstellung heraus bewegbar ist, dass der Löseantrieb (300, 410) durch einen Elektromotor (302, 422) mit einem Untersetzungsgetriebe (358, 424) antreibbar ist, dass eine Steuerung (350) vorgesehen ist, welche nach einmaligem Betätigen eines Startschalters (352) über den Löseantrieb (300, 410) die Fixiereinrichtung (F) derart betätigt, dass der Löseantrieb (300, 410) während eines für das Herausbewegen des Kugelhalses (16) aus der jeweiligen Arbeitsstellung oder Ruhestellung erforderlichen Zeitraums auf die Fixiereinrichtung (F) einwirkt, so dass eine Aufhebung der Fixierung des Kugelhalses (16) in der jeweiligen Arbeitsstellung oder Ruhestellung erfolgt, und anschließend ein Übergang der Fixiereinrichtung (F) in eine Fixierbereitschaftsstellung erfolgt, so dass der Löseantrieb (300, 410) bereits vor Erreichen der jeweils nachfolgenden Ruhestellung bzw. Arbeitsstellung nicht mehr auf die Fixiereinrichtung (F) einwirkt.

2. Anhängekupplung nach Anspruch 1, **dadurch gekennzeichnet, dass** mit der Fixiereinrichtung (F) der Kugelhals (16) auch in der Ruhestellung fixierbar ist und dass die Fixiereinrichtung (F) auch in der Ruhestellung mittels des Löseantriebs (300, 410) betätigbar ist.

3. Anhängekupplung nach einem der voranstehenden Ansprüche, **dadurch gekennzeichnet, dass** der Löseantrieb (300, 410) über ein Verbindungselement (152) auf die Fixiereinrichtung (F) wirkt und dadurch getrennt von der Fixiereinrichtung (F) am Kraftfahrzeug angeordnet werden kann.

4. Anhängekupplung nach einem der voranstehenden Ansprüche, **dadurch gekennzeichnet, dass** der Kugelhals (16) durch einen elektrisch betreibbaren Schwenkantrieb (420) von einer Stellung in die jeweils andere Stellung bewegbar ist.

5. Anhängekupplung nach Anspruch 4, **dadurch gekennzeichnet, dass** der Schwenkantrieb (420) durch einen Elektromotor (422) antreibbar ist.

6. Anhängekupplung nach einem der Ansprüche 4 oder 5, **dadurch gekennzeichnet, dass** eine Steuerung (500) vorgesehen ist, welche nach einem einmaligen Betätigen eines Startschalters (502) ein Betätigen der Fixiereinrichtung (F) zum Aufheben der Fixierung in der jeweiligen Stellung und ein Verschwenken des Kugelhalses (16) von der jeweiligen Stellung in die jeweils andere Stellung mit Fixieren des Kugelhalses (16) in der jeweils anderen Stellung durch die Fixiereinrichtung (F) steuert.

7. Anhängekupplung nach Anspruch 6, **dadurch gekennzeichnet, dass** die Steuerung (500) nach Betätigen des Startschalters (502) den Elektromotor (422) einschaltet und nach Erreichen der jeweils anderen Stellung sowie Fixieren des Kugelhalses (16) in dieser Stellung abschaltet.

8. Anhängekupplung nach einem der voranstehenden Ansprüche, **dadurch gekennzeichnet, dass** die Fixiereinrichtung (F) eine Betätigungseinrichtung (80) und eine den elastischen Kraftspeicher (126) umfassende Spannkrafterzeugungseinheit (120) sowie Stützelemente (50, 60) und Anschlagelemente (56, 66) umfasst.

9. Anhängekupplung nach einem der voranstehenden Ansprüche, **dadurch gekennzeichnet, dass** die Fixiereinrichtung (F) zwei im Abstand voneinander am Schwenkteil (14) angeordnete Anschlagelemente (56, 66) und zwei am Lagerteil (10) angeordnete Stützelemente (50, 60; 50', 160)aufweist und dass zum Fixieren des Kugelhalses (16) in der Arbeitsstellung eines der Stützelemente (60, 160) und eines der Anschlagelemente (66) im Sinne einer Schwenkbewegung des Kugelhalses (16) in einer ersten Richtung (58) zusammenwirken, welcher das andere (50, 50') der Stützelemente und das andere der Anschlagelemente (56) entgegenwirken und dass hierbei die Anschlagelemente (56, 66) und die Stützelemente (50, 60; 50', 160) spielfrei gegeneinander anlegbar sind.

10. Anhängekupplung nach Anspruch 9, **dadurch gekennzeichnet, dass** zum Fixieren des Kugelhalses (16) in der Arbeitsstellung die Anschlagelemente (56, 66) und die Stützelemente (50, 60; 50', 160) in einer Spannstellung gegeneinander verspannbar sind.

11. Anhängekupplung nach Anspruch 9, **dadurch gekennzeichnet, dass** in der Spannstellung mindestens ein Element (60, 160) eines Paares (60, 66; 160, 66') aus jeweils einem der Stützelemente (50, 60; 50', 160) und Anschlagelemente (56, 66) in Spannkraftrichtung (58) nachstellend auf das andere Element (66, 66') wirkt.

## Claims

1. Trailer coupling for motor vehicles comprising a coupling unit with a bearing part (10) arranged so as to be fixed on the vehicle and a pivoting part (14) mounted on the bearing part (10) and having a ball neck (16) and a coupling ball (20) pivotable relative to the bearing part (10) about an axis (12) between a rest position and an operative position and a mechanical fixing device (F), the ball neck (16) being fixable in the operative position in relation to the bearing part (10) with said fixing device and said fixing device being acted upon by an elastic force storing device (126) in the direction of its position fixing the ball neck (16) in place, wherein for moving the ball neck (16) out of the operative position the fixing device (F) is actuatable by an electrically operable releasing drive (300, 410) and wherein the releasing drive (300, 410) acts on the fixing device (F) in the sense of overriding the force action of the elastic force storing device (126) of said fixing device,
**characterized in that** during the actuation of the fixing device (F) the ball neck (16) is freely movable out of the operative position, that the releasing drive (300, 410) is drivable by an electric motor (302, 422) with a reducing gear (358, 424), that a control (350) is provided for actuating the fixing device (F) via the releasing drive (300, 410) following a one-time actuation of a starter switch (352) in such a manner that the releasing drive (300, 410) acts on the fixing device (F) during a period of time required for the ball neck (16) to move out of the respective operative or rest position so that the fixing of the ball neck (16) in the respective operative or rest position is overridden and, subsequently, the fixing device (F) transfers into a standby fixing position so that the releasing drive (300, 410) already no longer acts on the fixing device (F) before the respectively following rest or operative position is reached.

2. Trailer coupling as defined in claim 1, **characterized in that** the ball neck (16) is also fixable in the rest position with the fixing device (F) and that the fixing device (F) is also actuatable in the rest position by means of the releasing drive (300, 410).

3. Trailer coupling as defined in either one of the preceding claims, **characterized in that** the releasing drive (300, 410) acts on the fixing device (F) via a connecting element (152) and, as a result, can be arranged on the motor vehicle separately from the fixing device (F).

4. Trailer coupling as defined in any one of the preceding claims, **characterized in that** the ball neck (16) is movable from one position into the respectively other position by an electrically operable pivot drive (420).

5. Trailer coupling as defined in claim 4, **characterized in that** the pivot drive (420) is drivable by an electric motor (422).

6. Trailer coupling as defined in either one of claims 4 or 5, **characterized in that** a control (500) is provided for controlling actuation of the fixing device (F) for overriding the fixing in the respective position and pivoting of the ball neck (16) from the respective position into the respectively other position with the ball neck (16) being fixed in place in the respectively other position by the fixing device (F) following a one-time actuation of a starter switch (502).

7. Trailer coupling as defined in claim 6, **characterized in that** the control (500) switches on the electric motor (422) following actuation of the starter switch (502) and once the respectively other position has been reached and the ball neck (16) fixed in place switches it off in this position.

8. Trailer coupling as defined in any one of the preceding claims, **characterized in that** the fixing device (F) comprises an actuating device (80) and a clamping force generating unit (120) including the elastic force storing device (126) as well as supporting elements (50, 60) and stop elements (56, 66).

9. Trailer coupling as defined in any one of the preceding claims, **characterized in that** the fixing device (F) has two stop elements (56, 66) arranged on the pivoting part (14) at a distance from one another and two supporting elements (50, 60; 50', 160) arranged on the bearing part (10) and that for fixing the ball neck (16) in the operative position one of the supporting elements (60, 160) and one of the stop elements (66) interact in the sense of a pivoting movement of the ball neck (16) in a first direction (58), this being counteracted by the other one (50, 50') of the supporting elements and the other one of the stop elements (56) and that, as a result, the stop elements (56, 66) and the supporting elements (50, 60; 50', 160) are able to abut on one another free from clearance.

10. Trailer coupling as defined in claim 9, **characterized in that** for fixing the ball neck (16) in the operative position the stop elements (56, 66) and the supporting elements (50, 60; 50', 160) are tensionable against one another in a clamping position.

11. Trailer coupling as defined in claim 9, **characterized in that** in the clamping position at least one element (60, 160) of a pair (60, 66; 160, 66') consisting of one of the respective supporting elements (50, 60; 50', 160) and stop elements (56, 66) acts on the other element (66, 66') in an adjusting manner in a clamping force direction (58).

## Revendications

1. Attelage de remorque pour véhicules automobiles, comprenant une unité d'attelage présentant une partie de support (10) fixée au véhicule et une partie pivotante (14) montée sur la partie de support (10) et pourvue d'un col porte-boule (16) et d'une boule d'attelage (20), lequel peut pivoter par rapport à la partie de support (10) autour d'un axe (12) entre une position de repos et une position de travail, et comprenant un dispositif de fixation mécanique (F), au moyen duquel le col porte-boule (16) peut être fixé par rapport à la partie de support dans la position de travail, et lequel est sollicité en direction de sa position fixant le col porte-boule (16) par un accumulateur de force élastique (126), le dispositif de fixation (F), pour le déplacement du col porte-boule (16) à partir de la position de travail, pouvant être actionné au moyen d'un entraînement de libération (300, 410) à fonctionnement électrique et l'entraînement de libération (300, 410), pour mettre fin à l'action de la force de l'accumulateur de force élastique (126) du dispositif de fixation (F), agissant sur ce dernier,
**caractérisé en ce que**, lors de l'actionnement du dispositif de fixation (F), le col porte-boule (16) peut sortir de la position de travail, **en ce que** l'entraînement de libération (300, 410) peut être entraîné par un moteur électrique (302, 422) pourvu d'un démultiplicateur (358, 424), **en ce qu'**une commande (350) est prévue, laquelle, après qu'un commutateur de démarrage (352) a été actionné une fois, actionne le dispositif de fixation (F) par l'intermédiaire de l'entraînement de libération (300, 410) de telle manière que l'entraînement de libération (300, 410) agit sur le dispositif de fixation (F) pendant un laps de temps nécessaire pour faire sortir le col porte-boule (16) de la position de travail ou de la position de repos respective, de sorte que le col porte-boule (16) cesse d'être fixé dans la position de travail ou la position de repos respective, puis le dispositif de fixation (F) passe dans une position prête à la fixation, de sorte que l'entraînement de libération (300, 410) n'agit plus sur le dispositif de fixation (F) avant même d'avoir atteint la position de repos ou la position de travail respectivement suivante.

2. Attelage de remorque selon la revendication 1, **caractérisé en ce que** le dispositif de fixation (F) permet également de fixer le col porte-boule (16) dans la position de repos et **en ce que** le dispositif de fixation (F) peut également être actionné dans la position de repos au moyen de l'entraînement de libération (300, 410).

3. Attelage de remorque selon l'une quelconque des revendications précédentes, **caractérisé en ce que** l'entraînement de libération (300, 410) agit sur le dispositif de fixation (F) par l'intermédiaire d'un élément de liaison (152) et peut ainsi être disposé sur le véhicule automobile séparément du dispositif de fixation (F).

4. Attelage de remorque selon l'une quelconque des revendications précédentes, **caractérisé en ce que** le col porte-boule (16) peut être déplacé d'une position dans l'autre position par un entraînement pivotant (420) à fonctionnement électrique.

5. Attelage de remorque selon la revendication 4, **caractérisé en ce que** l'entraînement pivotant (420) peut être entraîné par un moteur électrique (422).

6. Attelage de remorque selon l'une quelconque des revendications 4 ou 5, **caractérisé en ce qu'**une commande (500) est prévue, laquelle, après qu'un commutateur de démarrage (502) a été actionné une seule fois, commande un actionnement du dispositif de fixation (F) pour que cesse la fixation dans la position respective et un pivotement du col porte-boule (16) de la position respective dans l'autre position par fixation du col porte-boule (16) dans l'autre position au moyen du dispositif de fixation (F).

7. Attelage de remorque selon la revendication 6, **caractérisé en ce que** la commande (500), après que le commutateur de démarrage (502) a été actionné, active le moteur électrique (422) et le désactive une fois l'autre position atteinte et une fois le col porte-boule (16) fixé dans cette position.

8. Attelage de remorque selon l'une quelconque des revendications précédentes, **caractérisé en ce que** le dispositif de fixation (F) comprend un dispositif d'actionnement (80) et une unité de production de force de serrage (120) comportant l'accumulateur de force élastique (126) ainsi que des éléments d'appui (50, 60) et des éléments de butée (56, 66).

9. Attelage de remorque selon l'une quelconque des revendications précédentes, **caractérisé en ce que** le dispositif de fixation (F) comprend deux éléments de butée (56, 66) disposés sur la partie pivotante (14) à distance l'un de l'autre et deux éléments d'appui (50, 60 ; 50', 160) disposés sur la partie de support (10) et **en ce que** pour fixer le col porte-boule (16) dans la position de travail, un des éléments d'appui (60, 160) et un des éléments de butée (66) coopèrent pour faire pivoter le col porte-boule (16) dans une première direction (58), l'autre élément (50, 50') parmi les éléments d'appui et l'autre élément parmi les éléments de butée (56) agissant en sens contraire et **en ce que** les éléments de butée (56, 66) et les éléments d'appui (50, 60 ; 50', 160) peuvent s'appliquer les uns contre les autres sans jeu.

10. Attelage de remorque selon la revendication 9, **caractérisé en ce que** pour la fixation du col porte-boule (16) dans la position de travail, les éléments de butée (56, 66) et les éléments d'appui (50, 60 ; 50', 160) peuvent être serrés les uns contre les autres dans une position de serrage.

11. Attelage de remorque selon la revendication 9, **caractérisé en ce que** dans la position de serrage, au moins un élément (60, 160) d'une paire (60, 66 ; 160, 66') composée respectivement d'un des éléments d'appui (50, 60 ; 50', 160) et d'un des éléments de butée (56, 66) a une action de réglage sur l'autre élément (66, 66') dans la direction de la force de serrage (58).
